(19) Europäisches Patentamt
European Patent Office
Office européen des brevets

(11) **EP 3 478 406 B1**

(12) **FASCICULE DE BREVET EUROPEEN**

(45) Date de publication et mention de la délivrance du brevet:
**07.09.2022 Bulletin 2022/36**

(21) Numéro de dépôt: **17735475.0**

(22) Date de dépôt: **30.06.2017**

(51) Classification Internationale des Brevets (IPC):
**B01J 20/04** (2006.01)   **B01J 20/08** (2006.01)
**B01J 20/30** (2006.01)   **B01J 39/10** (2006.01)
**C01F 7/00** (2022.01)   **C01F 7/14** (2022.01)

(52) Classification Coopérative des Brevets (CPC):
**B01J 20/041; B01J 20/08; B01J 20/3007;
B01J 20/305; B01J 20/3071; B01J 20/3078;
B01J 20/3085; B01J 39/10; C01F 7/141;
C01F 7/78;** C01P 2002/60; C01P 2004/60

(86) Numéro de dépôt international:
**PCT/EP2017/066347**

(87) Numéro de publication internationale:
**WO 2018/002336 (04.01.2018 Gazette 2018/01)**

(54) **PROCEDE DE PREPARATION D'UN MATERIAU ADSORBANT ET PROCEDE D'EXTRACTION DE LITHIUM A PARTIR DE SOLUTIONS SALINES UTILISANT LEDIT MATERIAU**

VERFAHREN ZUR HERSTELLUNG EINES SAUGFÄHIGEN MATERIALS UND VERFAHREN ZUR EXTRAKTION VON LITHIUM AUS SALZLÖSUNGEN UNTER VERWENDUNG DES BESAGTEN MATERIALS

METHOD FOR PRODUCING AN ADSORBENT MATERIAL AND METHOD FOR EXTRACTING LITHIUM FROM SALINE SOLUTIONS USING SAID MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2016 FR 1656212**

(43) Date de publication de la demande:
**08.05.2019 Bulletin 2019/19**

(73) Titulaires:
• **Eramet**
**75015 Paris (FR)**
• **IFP Energies nouvelles**
**92852 Rueil-Malmaison Cedex (FR)**

(72) Inventeurs:
• **LECOCQ, Vincent**
**69530 Orlinéas (FR)**
• **BURDET, Fabien, André, Pierre**
**78370 Plaisir (FR)**
• **OUDART, Yohan, Florent**
**78000 Versailles (FR)**

• **MAILLET, Guillaume, Patrick, André**
**92852 Rueil-Malmaison (FR)**

(74) Mandataire: **Lavoix**
**2, place d'Estienne d'Orves**
**75441 Paris Cedex 09 (FR)**

(56) Documents cités:
**EP-A1- 0 103 034      WO-A1-2009/039133
WO-A1-2015/097205      WO-A1-2016/193439
US-A- 4 348 297      US-A- 5 599 516**

• **Vitaly Isupov ET AL: "Synthesis, Structure, Properties and Application of Aluminium Hydroxide Intercalation Compounds", Chemistry for Sustainable Development, 4 août 2000 (2000-08-04), pages 121-127, XP055135012, Extrait de l'Internet: URL:http://www.sibran.ru/upload/iblock/4be /4be336e1a48b9e7197eb4f1f8730b832.PDF [extrait le 2014-08-18]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- GUSCHINA E P ET AL: "Recovery of lithium chloride from solns. - using basic lithium aluminium chloride sorbent in multistage countercurrent flow system", WPI / THOMSON,, vol. 1994, no. 36, 1 septembre 1994 (1994-09-01), XP002756839, -& WO 94/19280 A1 (N PROIZV AKTSIONERNOE OBSCHEST [RU]; RYABTSEV ALEXANDR D [RU]; MENZHER) 1 septembre 1994 (1994-09-01)
- ISUPOV ET AL: "Aluminium hydroxide as selective sorbent of lithium salts from brines and technical solutions", CHEMISTRY OF MICROPOROUS CRYSTALS : PROCEEDINGS OF THE INTERNATIONAL SYMPOSIUM ON CHEMISTRY OF MICROPOROUS CRYSTALS, TOKYO, JUNE 26-29, 1990 IN: STUDIES IN SURFACE SCIENCE AND CATALYSIS; ISSN 0167-2991; VOL. 60; ADSORPTION AND ITS APPLICATIONS IN IND, vol. 120, no. Part A, 1 janvier 1999 (1999-01-01), pages 621-652, XP008163815, ISSN: 0167-2991, DOI: 10.1016/S0167-2991(99)80567-9 [extrait le 2007-10-22]
- Patrick Euzen ET AL: "Alumina" In: "Handbook of Porous solids", 25 avril 2008 (2008-04-25), Wiley-VCH Verlag GmbH, XP055057945, ISBN: 978-3-52-761828-6 pages 1591-1677, DOI: 10.1002/9783527618286.ch23b, page 1602, alinéa 2 - page 1603, alinéa 2 page 1606 - page 1608
- WU Z ET AL: "Study on the morphology of alpha-Al2O3 precursor prepared by precipitation method", JOURNAL OF ALLOYS AND COMPOUNDS, ELSEVIER SEQUOIA, LAUSANNE, CH, vol. 467, no. 1-2, 7 janvier 2009 (2009-01-07), pages 600-604, XP025716633, ISSN: 0925-8388, DOI: 10.1016/J.JALLCOM.2007.12.092 [extrait le 2008-02-20]

**Description**

Domaine technique

La présente invention se rapporte au domaine des matériaux solides pour l'adsorption du lithium. En particulier, la présente invention se rapporte à un nouveau procédé de préparation d'un matériau solide cristallisé et mis en forme, de préférence sous forme d'extrudés, de formule $(LiCl)_x.2Al(OH)_3,nH_2O$ avec n étant compris entre 0,01 et 10, x étant compris entre 0,4 et 1, comprenant une étape a) de précipitation de boehmite dans des conditions de température et de pH spécifiques, une étape de mise en forme par malaxage acide en présence d'un acide spécifique, l'ensemble des caractéristiques du procédé permettant d'augmenter la capacité d'adsorption du lithium ainsi que la cinétique d'adsorption des matériaux obtenus par rapport aux matériaux de l'art antérieur lorsque celui-ci est utilisé dans un procédé d'extraction du lithium de solutions salines et permettant d'utiliser une quantité plus faible de chlorure de lithium par rapport aux procédés de l'art antérieur ce qui permet d'améliorer le coût de production du solide et de diminuer la quantité de lithium perdue dans les effluents.

La présente invention se rapporte également à un procédé d'extraction du lithium à partir de solutions salines utilisant ledit matériau solide cristallisé de formule $(LiCl)_x.2Al(OH)_3,nH_2O$ avec n et x ayant la définition précitée préparé selon le nouveau procédé de préparation selon l'invention.

La présente invention se rapporte également à un matériau solide cristallisé de formule $(LiCl)_x.2Al(OH)_3.nH_2O$ avec n étant compris entre 0,01 et 10, x étant compris entre 0,4 et 1, caractérisé en ce que ledit matériau est susceptible d'être obtenu par le procédé selon l'invention.

Art antérieur

Les ions lithium coexistent avec des quantités massives de métaux tels que par exemple les alcalins, les alcalino-terreux, le bore et les sulfates, en particulier dans des solutions salines telles que les saumures. Ainsi, ils doivent faire l'objet d'une extraction économique et sélective à partir de ces solutions salines. En effet, les propriétés chimiques du lithium et des métaux alcalins, de préférence le sodium (Na), et le potassium (K) et des alcalino-terreux, de préférence le magnésium (Mg), le calcium (Ca) et le strontium (Sr), rendent difficile la séparation de ces éléments.

Les matériaux solides de formule $(LiCl)_x.2Al(OH)_3,nH_2O$ avec n et x ayant la définition précitée sont connus pour leur utilisation dans les phénomènes d'adsorption/désorption des ions lithium et en particulier dans les procédés d'extraction du lithium à partir de solutions salines. Ces structures peu stables permettraient l'intercalation d'atomes de lithium dans la structure et ainsi l'extraction du lithium.

Plusieurs protocoles opératoires conduisant à des solides susceptibles d'adsorber sélectivement le lithium ont été mis en évidence dans l'art antérieur. Dans tous les cas, un solide trihydroxyde d'aluminium $Al(OH)_3$, préparé ou commercial, est mis en contact avec un précurseur de lithium. Trois principaux précurseurs sont utilisés : le plus utilisé est le chlorure de lithium (LiCl). Un hydroxyde d'aluminium (LiOH) ou un carbonate de lithium ($Li_2CO_3$) peuvent également être mis en œuvre.

Le brevet US 6 280 693 décrit un procédé de préparation d'un solide $LiCl/Al(OH)_3$ par ajout d'une solution aqueuse de LiOH à une alumine hydratée polycristalline pour former du $LiOH/Al(OH)_3$, et ainsi créer des sites de lithium actifs dans les couches cristallines de l'alumine sans en altérer la structure. La transformation de $LiOH/Al(OH)_3$ en $LiCl/Al(OH)_3$ est ensuite réalisée par ajout d'acide chlorhydrique dilué. Les pastilles d'alumine ainsi préparées sont ensuite utilisées dans un procédé d'extraction du lithium à partir de saumures à haute température. Le procédé d'extraction du lithium décrit dans le brevet US 6 280 693 utilise le solide détaillé ci-dessus et comprend les étapes ci-après :

a) Saturation d'un lit de solide par une saumure contenant un sel de lithium LiX, X étant choisi parmi les halogénures, les nitrates, les sulfates et les bicarbonates,
b) Déplacement de la saumure imprégnée par une solution concentrée NaX,
c) Élution du sel LiX capté par le solide par passage d'une solution non saturée de LiX,
d) Déplacement de l'imprégnant par une solution concentrée de NaX, les étapes a) à d) sont ensuite répétées au moins une fois.

Le brevet RU 2 234 367 décrit un procédé de préparation d'un solide de formule $LiCl.2Al(OH)_3,nH_2O$ comprenant une étape de mélange de trichlorure d'aluminium ($AlCl_3$) et de carbonate de lithium ($Li_2CO_3$) en présence d'eau à 40°C. Le résidu obtenu est filtré et lavé puis séché pendant 4 heures à 60°C. Le solide ainsi obtenu n'est pas mis en forme.

Le solide obtenu est utilisé pour l'extraction du lithium contenu dans des solutions salines par mise en contact avec de l'eau afin d'éliminer une partie du lithium puis par mise en contact avec une solution saline contenant du lithium. La capacité statique ainsi obtenue est comprise entre 6,0 et 8,0 mg de lithium par g de solide.

Le brevet CN1243112 décrit un procédé de préparation d'un solide de formule $LiCl.2Al(OH)_3,nH_2O$ comprenant

une étape de précipitation de microcristaux d'hydroxyde d'aluminium $Al(OH)_3$ par mise en contact d'$AlCl_3$ et d'hydroxyde de sodium NaOH, puis la mise en contact desdits microcristaux avec une solution à 6% de chlorure de lithium LiCl à 80°C pendant 2 heures suivie d'une filtration, d'un rinçage et d'un séchage pour obtenir une poudre de $LiCl.2Al(OH)_3,nH_2O$ doté d'une structure non ordonnée et amorphe. Une solution d'un polymère macromoléculaire choisie parmi les résines fluorées, le chlorure de polyvinyle (PVC), le chlorure de polyvinyle chloré (CPVC), le perchlorate d'éthylène et l'acétate-butyrates de cellulose (CAB) faisant office de liant est ensuite mélangée à la poudre de $LiCl.2Al(OH)_3,nH_2O$ pour obtenir une pâte qui est ensuite mise en forme par granulation suivie d'un séchage à l'air. Le document WO 2018/097205 A1 divulgue un procédé de préparation d'un matériau solide cristallisé de formule $LiCl.2Al(OH)_3,nH_2O$ avec n étant compris entre 0,01 et 10. Ce procédé ne divulgue pas une étape de précipitation de boehmite et divulgue une étape de mise en forme par malaxage extrusion acide étant mise en œuvre en présence de liant.

L'utilisation d'un tel solide dans un procédé d'extraction du lithium des saumures de lacs salés permet d'obtenir un faible rapport Mg/Li et une liqueur mère riche en lithium et conforme aux normes de production de carbonates ou de chlorures de lithium.

Un objectif de la présente invention est de résoudre le problème technique consistant à fournir un matériau solide permettant l'extraction sélective de lithium à partir de saumure, ledit matériau solide étant de bonne qualité, sans défaut apparent et présentant une bonne cohésion et une bonne tenue mécanique lorsque celui-ci est mis au contact d'une solution saumure ou dans l'eau.

Un objectif de la présente invention est de résoudre le problème technique consistant à fournir un nouveau procédé de préparation d'un tel matériau solide.

Un autre objectif de la présente invention est de résoudre le problème technique consistant à fournir un procédé d'extraction du lithium de solutions salines utilisant ledit matériau solide.

Un autre objectif de la présente invention est de résoudre le problème technique consistant à fournir un matériau solide pour la mise en œuvre d'un procédé d'extraction de lithium de solutions salines, dans lequel le matériau solide permet de limiter la génération de particules fines notamment car les particules fines augmentent la perte de charge, favorise la création de chemins préférentiels et augmentent le taux de renouvellement du matériau lors du passage de la saumure au travers d'un lit d'un matériau au sein d'une colonne.

Les demandeurs ont découvert un nouveau procédé de préparation d'un matériau solide cristallisé de formule $(LiCl)_x.2Al(OH)_3,nH_2O$ avec n étant compris entre 0,01 et 10, x étant compris entre 0,4 et 1, comprenant une combinaison d'étapes spécifiques et en particulier que le fait de réaliser à la fois l'étape a) de précipitation de boehmite dans des conditions de température et de pH spécifiques, une autre étape e) de mise en forme de la pâte obtenue par malaxage-extrusion en présence d'un acide spécifique, permet d'obtenir un matériau solide cristallisé de formule $(LiCl)_x.2Al(OH)_3,nH_2O$ sans défaut apparent présentant à la fois, une bonne cohésion, une bonne tenue mécanique du matériau lorsque celui-ci est mis au contact d'une solution saumure ou dans l'eau et présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Sans être lié à une quelconque théorie, les demandeurs ont mis en évidence que la mise en œuvre de l'étape a) de précipitation dans les conditions opératoires de températures et de pH telles que définies selon l'invention permet l'obtention d'un précipité de boehmite composée de cristallites de faible taille. En particulier, le précipité de boehmite obtenu présente une taille, obtenue par la formule de Scherrer en diffraction des rayons X selon les directions cristallographiques [020] et [120], respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 nm et entre 0,5 et 2,5 nm.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le procédé selon l'invention comprenant une étape a) de précipitation telle que revendiquée permet ainsi l'obtention d'un matériau final solide cristallisé de formule $(LiCl)_x.2Al(OH)_3,nH_2O$, avec n étant compris entre 0,01 et 10, x ayant la définition précitée, également peu cristallisé mais présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

## Résumé et intérêt de l'invention

On entend de préférence par « matériau de formule $(LiCl)_x.2Al(OH)_3,nH_2O$» un matériau comprenant essentiellement ou consistant d'une phase cristallisée de formule $(LiCl)_x.2Al(OH)_3,nH_2O$, avec n et x ayant la définition précitée.

La présente invention a pour objet un procédé de préparation d'un matériau solide cristallisé de formule $(LiCl)_x.2Al(OH)_3,nH_2O$ avec n étant compris entre 0,01 et 10, x étant compris entre 0,4 et 1, ledit procédé comprenant au moins les étapes suivantes :

a) une étape de précipitation de la boehmite, en milieu aqueux, comprenant la mise en contact d'au moins un précurseur basique de préférence choisi parmi l'aluminate de sodium, l'aluminate de potassium, l'ammoniaque, l'hydroxyde de sodium et l'hydroxyde de potassium ; et d'au moins un précurseur acide, le chlorure d'aluminium, et l'acide chlorhydrique, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5,

b) une étape de mise en contact du précipité obtenu à l'étape a) avec au moins une source de lithium,

c) une étape de filtration de la suspension obtenue à l'étape b) pour obtenir une pâte,

d) une étape de séchage de la pâte obtenue à l'issue de l'étape c) à une température comprise entre 20 et 80°C de préférence pendant une durée de préférence comprise entre 5 minutes et 12h,

e) une étape de mise en forme de ladite pâte séchée par malaxage extrusion acide dans laquelle ladite pate séchée issue de l'étape d) est malaxée en présence d'une quantité d'acide comprise entre 0,05 et 5 % poids par rapport à la matière sèche, la matière sèche étant la masse de ladite pâte issue de l'étape d) séchée en étuve à 200°C de préférence pendant 6h, ledit acide étant un acide organique ou inorganique, et dans laquelle ladite pâte est ensuite soumise à une étape d'extrusion,

f) une étape de séchage du matériau mis en forme obtenu à l'issue de l'étape e) à une température comprise entre 20 et 200°C, de préférence pendant une durée de préférence comprise entre 5 minutes et 20 heures.

Un avantage de l'invention est fournir un matériau solide cristallisé mis en forme, de préférence sous forme d'extrudés, de formule $(LiCl)_x.2Al(OH)_3,nH_2O$ avec n et x ayant la définition précitée, de bonne qualité, sans défaut apparent, et présentant une bonne cohésion ainsi qu'une tenue mécanique améliorée lorsque celui-ci est mis au contact d'une solution saumure ou d'une solution diluée et de préférence dans l'eau.

Un autre avantage de la présente invention est de fournir un matériau solide cristallisé mis en forme, de préférence sous forme d'extrudés, de formule $(LiCl)_x.2Al(OH)_3,nH_2O$ avec n et x ayant la définition précitée, présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Un autre avantage de la présente invention est de fournir un matériau solide cristallisé mis en forme, de préférence sous forme d'extrudés, de formule $(LiCl)_x.2Al(OH)_3,nH_2O$ avec n et x ayant la définition précitée, présentant une sélectivité Lithium/Bore, présent dans les solutions salines, plus importante comparativement aux matériaux préparés selon l'art antérieur préparés par malaxage en présence d'une base.

Un autre avantage d'un mode de réalisation préféré de la présente invention réside dans l'utilisation d'une quantité plus faible de chlorure de lithium par rapport aux procédés de l'art antérieur ce qui permet d'améliorer le coût de production du solide et de diminuer la quantité de lithium perdue dans les effluents.

L'invention présente encore l'avantage de fournir un procédé de préparation d'un tel matériau.

La capacité d'adsorption du matériau précitée est définie par la quantité de lithium adsorbé, pour une solution donnée. Elle est calculée par l'homme du métier en intégrant la quantité de lithium fixée à partir d'une courbe de perçage dite aussi courbe de fuite ou courbe de saturation. L'intégration est réalisée sur le volume par la différence de concentration en lithium entre une solution après son chargement sur le matériau précité et la concentration théorique sans chargement. Cette quantité de matière peut être rapportée à la quantité de matériau utilisée pour obtenir une capacité en milligrammes de lithium par gramme de solide.

Pour le bore, la capacité d'adsorption du matériau précitée est calculée de la même façon que pour le lithium, pour une solution donnée. Elle est calculée par l'homme du métier en intégrant la quantité de bore fixée à partir d'une courbe de perçage dite aussi courbe de fuite ou courbe de saturation. L'intégration est réalisée sur le volume par la différence de concentration en bore entre une solution après son chargement sur le matériau précité et la concentration théorique sans chargement. Cette quantité de matière peut être rapportée à la quantité de matériau utilisée pour obtenir une capacité en milligrammes de bore par gramme de solide. Elle est ensuite comparée à la capacité d'adsorption du lithium par le ratio Li/B qui est le rapport massique de la quantité de lithium adsorbé par la quantité de bore adsorbé.

La cinétique d'adsorption du matériau précité est mesurée par l'homme du métier en étudiant la forme d'une courbe de perçage dite aussi courbe de fuite ou courbe de saturation. Cette courbe est obtenue au moyen d'une colonne remplie avec le matériau adsorbant pour former un lit homogène, en faisant percoler une solution saline contenant du lithium et en mesurant la concentration en lithium à la sortie du lit d'adsorbant en fonction du volume de solution utilisé pour un débit donné.

Par capacité d'adsorption améliorée par rapport aux matériaux de l'art antérieur, on entend une capacité d'adsorption supérieure à 6 mg de Li/g de matériau solide sec.

On entend ici par matériau solide sec, un matériau solide séché à 200 °C de préférence pendant 6 heures.

Par « mis en forme », on entend que le matériau est solide et présente une cohésion suffisante lorsque le solide est mis au contact d'une solution de saumure pour qu'il ne perde sensiblement pas son intégrité physique, c'est-à-dire qu'il conserve sensiblement sa mise en forme. Plus précisément, un solide mis en forme au sens de l'invention couvre un solide conservant sa cohésion dans les conditions d'extraction de lithium définies dans les exemples.

La cohésion ainsi que la résistance mécanique du matériau mis en forme, de préférence par extrusion, préparé selon l'invention sont testées lors de la réalisation des courbes de perçage dites aussi courbes de fuite ou courbes de saturation. Un solide présentant une bonne résistance mécanique ne produit pas de fines particules et permet d'opérer la colonne sans observation de colmatage. Un solide présentant une mauvaise résistance mécanique produit des fines particules qui induisent un colmatage de la colonne.

La cohésion ainsi que la résistance mécanique du matériau mis en forme, de préférence par extrusion, préparés selon l'invention sont aussi testées par l'intermédiaire d'un protocole de vieillissement accéléré sur table d'agitation, soit dans une saumure, soit dans l'eau.

La table d'agitation est animée d'un mouvement unidirectionnel horizontal d'amplitude 4 cm à une vitesse de 190 mouvements par minute. Les solides mis en forme sont ainsi agités pendant une durée totale de 168h.

A l'issue de ces 168h, le mélange solide mis en forme-saumure ou eau est tamisé à l'aide d'une grille de maille 315 $\mu$m. Puis les solides mis en forme restant sur le tamis sont lavés avec le milieu utilisé pendant l'agitation. La fraction liquide ainsi obtenue, contenant de fines particules solides (diamètre inférieur à 315 $\mu$m) en suspension, est filtrée à l'aide d'un Büchner équipé d'un papier filtre dont les pores ont une dimension de 0,45 $\mu$m. Le gâteau formé par l'agglomération des fines particules est lavé avec de l'eau déminéralisée. Le résidu solide ainsi obtenu est séché en étuve à 50°C jusqu'à stabilisation de la masse.

Le rapport de la masse de résidu solide sur la masse de solides mis en forme initiale est alors calculé, donnant accès à un pourcentage de destruction des solides mis en forme.

Le pourcentage de destruction des matériaux préparés selon l'invention permet d'apprécier la cohésion desdits matériaux.

Une bonne cohésion est notamment obtenue pour les matériaux dont le pourcentage de destruction est inférieur à 60%, et de préférence inférieur à 50%, lorsque ceux-ci sont mis au contact d'une solution de saumure ou de toute autre solution aqueuse diluée et en particulier de l'eau.

Les matériaux préparés selon l'invention présentent par ailleurs une tenue mécanique améliorée par rapport aux matériaux de l'art antérieur.

Par « tenue mécanique améliorée », on entend que les matériaux préparés selon l'invention présentent un pourcentage de destruction, lorsqu'ils sont mis au contact d'une solution de saumure ou de toute autre solution aqueuse diluée et en particulier de l'eau, inférieur à 30% et de préférence inférieur à 20%.

Un autre avantage de 'l'invention est la fourniture d'un matériau solide cristallisé mis en forme, de préférence sous forme d'extrudés, de formule $(LiCl)_x.2Al(OH)_3,nH_2O$ avec n et x ayant la définition précitée présentant pas ou peu de fissures qui pourraient provoquer un gonflement néfaste à la cohésion et à la tenue mécanique du matériau lorsque celui-ci est mis au contact d'une solution saumure ou d'une solution diluée et de préférence dans l'eau, et la fourniture d'un procédé de préparation d'un tel matériau.

La présente invention a également pour objet un procédé d'extraction du lithium de solutions salines utilisant ledit matériau solide cristallisé mis en forme de formule $(LiCl)_x.2Al(OH)_3,nH_2O$ avec n étant compris entre 0,01 et 10, x étant compris entre 0,4 et 1, préparé selon le nouveau procédé de préparation selon l'invention. L'augmentation de capacité du matériau par rapport au matériau de l'art antérieur permet d'utiliser moins de matériau pour extraire la même quantité de lithium dans une saumure.

Un avantage du matériau et du procédé d'extraction selon l'invention est de permettre l'extraction sélective du lithium à partir d'une solution saline et d'obtenir ainsi un facteur d'épuration élevé par rapport à la solution saline initiale, calculé comme étant le rapport X/Li qui est égal au rapport molaire de concentrations X/Li dans la solution saline initiale divisé par le rapport molaire de concentrations X/Li dans la solution finale, X étant choisi parmi le sodium (Na), le potassium (K), le magnésium (Mg), le calcium (Ca), le bore (B), le soufre (S) et le strontium (Sr). La présente invention a également pour objet un matériau solide cristallisé de formule $(LiCl)_x.2Al(OH)_3,nH_2O$ avec n étant compris entre 0,01 et 10, x étant compris entre 0,4 et 1, de préférence sous forme d'extrudés, susceptible d'être obtenu selon un procédé de l'invention.

Description de l'invention

Conformément à l'invention, le procédé comprend avantageusement une étape a) de précipitation de la boehmite, en milieu réactionnel aqueux, ladite étape comprenant la mise en contact d'au moins un précurseur basique de préférence choisi parmi l'aluminate de sodium, l'aluminate de potassium, l'ammoniaque, l'hydroxyde de sodium et l'hydroxyde de potassium ; et d'au moins un précurseur acide, le trichlorure d'aluminium ($AlCl_3$), et l'acide chlorhydrique, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5.

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

De préférence, le précurseur basique est l'hydroxyde de sodium (NaOH).

De préférence, le ou les précurseur(s) basique(s) et acide(s) sont ajoutés dans ladite première étape de précipitation a) en solution aqueuse.

De préférence, le milieu réactionnel aqueux est de l'eau.

De préférence, ladite étape a) est mise en œuvre sous agitation.

De préférence, ladite étape a) de précipitation de la boehmite est mise en œuvre à une température comprise entre 5 et 30°C, et de manière préférée entre 10 et 30°C et de manière très préférée entre 10 et 25°C, et la quantité du précurseur basique étant choisie de manière à obtenir un pH de fin de précipitation dans le milieu réactionnel compris entre 7,5 et 9 et de manière préférée entre 7,7 et 8,8.

De préférence l'étape a) de précipitation est mise en œuvre pendant une durée comprise entre 10 minutes et 5 heures, de préférence entre 15 minutes et 2 heures.

Ladite étape a) de précipitation permet l'obtention d'une suspension de boehmite précipitée ou oxyhydroxyde d'aluminium (AlOOH).

La mise en œuvre de l'étape a) de précipitation dans les conditions opératoires de températures et de pH telles que définies permet l'obtention d'un précipité de boehmite présentant des cristallites de faible taille. On entend par cristallites de faible taille, un précipité de boehmite composée de cristallites dont la taille, obtenue par la formule de Scherrer en diffraction des rayons X selon les directions cristallographiques [020] et [120], est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 nm et entre 0,5 et 2,5 nm.

De préférence, le procédé comprend une étape de lavage et de filtration du précipité de boehmite obtenu à l'issue de l'étape a).

De préférence ladite étape de lavage est une étape de lavage à l'eau.

Conformément à l'invention, le procédé comprend une étape b) de mise en contact du précipité obtenu à l'étape a) avec au moins une source de lithium.

De préférence, la mise en contact est réalisée avec une quantité de chlorure de lithium équivalent à un ratio molaire Li/Al compris entre 0,3 et 4, de préférence entre 0,3 et 2, de manière préférée entre 0,3 et 1,2 et de manière très préférée entre 0,4 et 1, de préférence pendant une durée comprise entre 10 minutes et 12 heures.

De préférence, le précipité de boehmite obtenu à l'étape a) éventuellement filtré et lavé et le chlorure de lithium sont mélangés en présence d'eau pour obtenir une suspension dans l'étape b). De préférence, ladite étape b) de mélange est mise en œuvre sous agitation vigoureuse.

De préférence, ladite étape b) de mise en contact est réalisée à une température comprise entre 20 et 95° C et de préférence comprise entre 50 et 95°C et de manière préférée entre 70 et 95°C.

De préférence, l'étape b) de mise en contact est réalisé pendant une durée comprise entre 15 minutes et 12 heures et de préférence entre 15 minutes et 5 heures.

Conformément à l'invention, la suspension obtenue à l'issue de l'étape b) subit une étape c) de filtration pour obtenir une pâte.

De préférence, la suspension filtrée est ensuite lavée, de préférence avec une solution de LiCl, ou à l'eau.

Conformément à l'invention, la pâte obtenue à l'issue de l'étape c) est séchée dans une étape d) de séchage de préférence à une température comprise entre 20 et 80°C, de préférence pendant une durée de préférence comprise entre 5 minutes et 12 h.

De préférence, ladite étape de séchage est mise en œuvre, de manière préférée en étuve ou en four, à une température comprise entre 20 et 60°C et de manière très préférée entre 30 et 50°C, de préférence pendant une durée comprise entre 5 minutes et 10 h.

Les conditions opératoires de ladite étape d) de séchage permettent l'obtention d'une pâte séchée présentant une perte au feu (PAF) comprise entre 30 et 75% et de préférence entre 35 et 60%. La perte au feu obtenue permet la mise en forme, de préférence par extrusion, de la pâte séchée dans de bonnes conditions et l'obtention de matériaux mis en forme, de préférence sous forme d'extrudés, résistants et sans défaut apparent, c'est à dire sans fissure.

De manière à déterminer la PAF avant l'étape de mise en forme, une partie de la pâte obtenue est prélevée et mise à l'étuve pendant 6 h à 200°C. La PAF est obtenue par différence entre la masse de l'échantillon avant et après passage à l'étuve.

Conformément à l'invention, ladite pâte séchée obtenue à l'issue de l'étape d) de séchage subit, une étape e) de mise en forme par malaxage extrusion acide dans laquelle ladite pate séchée issue de l'étape d) est malaxée en présence d'une quantité d'acide comprise entre 0,05 et 5 % poids par rapport à la matière sèche, la matière sèche étant la masse de ladite pate issue de l'étape d) séchée en étuve à 200°C de préférence pendant 6h, ledit acide étant un acide organique ou inorganique.

De préférence, l'acide organique est choisi parmi les acides carboxyliques et leurs dérivés et de manière préférée parmi l'acide formique, l'acide acétique, l'acide oxalique, l'acide malonique, l'acide succinique, l'acide glutarique, l'acide adipique, seuls ou l'un quelconque de leurs mélanges ainsi que l'un quelconque de leurs dérivés.

On entend par dérivés d'acides carboxyliques, les sels d'acides carboxyliques et de préférence les sels d'alcalino-terreux, les sels d'alcalins et les sels d'ammonium, ou les anhydrides d'acide.

De préférence, l'acide inorganique est choisi parmi l'acide nitrique, l'acide phosphorique, l'acide sulfurique et l'acide chlorhydrique seul ou l'un quelconque de leurs mélanges.

De manière très préférée, ledit acide est un acide organique choisi parmi l'acide oxalique, l'acide malonique, l'acide succinique, l'acide glutarique, l'acide adipique, seuls ou l'un quelconque de leurs mélanges et de manière plus préférée, ledit acide est l'acide oxalique.

Ledit acide peut avantageusement être ajouté dans ladite étape e) de mise en forme en solution dans l'eau ou sous sa forme pure, liquide ou solide.

La quantité d'acide ajouté dans ladite étape e) est de préférence comprise entre 0,1 et 2,5% poids par rapport à la matière sèche, la matière sèche étant la masse de ladite pate issue de l'étape d) séchée en étuve à 200°C de préférence pendant 6h.

De préférence, aucune base n'est ajoutée dans l'étape e) de mise en forme par malaxage extrusion.

De préférence, ladite étape e) de mise en forme n'est pas mise en œuvre en présence d'au moins un précurseur solide d'alumine de préférence choisi parmi les oxydes d'aluminium, les hydroxydes d'aluminium et les oxyhydroxydes d'aluminium solubles ou dispersibles dans une solution d'acide phosphorique, de préférence parmi les hydroxydes d'aluminium et les oxyhydroxydes d'aluminium et de manière préférée parmi la boehmite ou la pseudo-boehmite.

Conformément à l'invention, ladite pate est ensuite soumise à une étape d'extrusion afin d'obtenir des extrudés.

On entend par étape de malaxage - extrusion, une étape dans laquelle la pâte séchée obtenue à l'issue de l'étape e) de séchage subit dans une première étape de malaxage, selon l'invention, en présence d'une base, puis la pâte est ensuite soumise à une étape d'extrusion par exemple par passage à travers une filière, à l'aide par exemple, d'un piston ou d'une extrudeuse continue double vis ou monovis. Le diamètre de la filière de l'extrudeuse est avantageusement variable et est compris entre 0,3 et 5 mm, de préférence entre 0,3 et 3 mm et de manière préférée entre 0,3 et 2 mm. La forme de la filière, et par conséquent, la forme du matériau obtenu sous forme d'extrudé, est avantageusement cylindrique, trilobée, quadrilobée ou bien multilobée.

Ladite étape e) de mise en forme par malaxage - extrusion est avantageusement réalisée de manière connue de l'Homme du métier.

Ladite étape e) de mise en forme par malaxage - extrusion, et en particulier ladite étape de malaxage, peut éventuellement être réalisée en l'absence de liant ou en présence d'un liant, à l'exception d'un liant choisi parmi les précurseurs solides d'alumine décrits ci-dessus.

De préférence, ladite pâte séchée obtenue à l'issue de l'étape d) de séchage, et éventuellement au moins un liant, ainsi que l'acide dans le cas ou ceux-ci sont présents, sont mélangés, de préférence en une seule fois, dans un malaxeur. Le malaxeur est avantageusement choisi parmi les malaxeurs batch, de préférence à bras à cames ou à bras en Z, ou bien à l'aide d'un malaxeur-mélangeur bi-vis. Les conditions de malaxage sont ajustées de manière connue de l'Homme du métier et visent à obtenir une pâte homogène et extrudable.

Dans les procédés de malaxage - extrusion connus de l'Homme du métier, l'extrudabilité de la pâte peut éventuellement avantageusement être ajustée avec l'ajout de l'eau afin d'obtenir une pâte adaptée à la réalisation de l'étape e) de mise en forme par extrusion.

Après l'étape de malaxage-extrusion, les extrudés obtenus peuvent avantageusement subir une étape de sphéronisation dans le cas où un matériau sous forme de billes est utilisé.

Conformément à l'invention, le matériau mis en forme et de préférence les extrudés obtenus à l'issue de l'étape e) subi(ssen)t une étape f) de séchage à une température comprise entre 20 et 200°C de préférence pendant une durée comprise entre 5 minutes et 20 heures, pour obtenir le matériau solide cristallisé de formule $(LiCl)_x.2Al(OH)_3,nH_2O$ mis en forme, de préférence sous forme d'extrudés ou de billes.

De préférence, ladite étape f) de séchage est mise en œuvre à une température comprise entre 20 et 100°C, de manière préférée entre 20 et 80°C et de manière très préférée entre 20 et 60°C, de préférence pendant une durée de préférence comprise entre 5 minutes et 18 heures, de préférence entre 5 minutes et 14 heures.

Les conditions spécifiques de ladite étape f) de séchage permettent l'obtention d'un matériau solide cristallisé présentant la phase $(LiCl)_x.2Al(OH)_3,nH_2O$ désirée.

Ladite étape f) de séchage est avantageusement réalisée selon les techniques connues de l'Homme du métier et de préférence en étuve ou en four.

De préférence, le matériau mis en forme séché et de préférence les extrudés obtenu(s) à l'issue de l'étape f) peu(ven)t éventuellement être soumis à une étape g) de traitement hydrothermal à une température comprise entre 50 et 200°C et de préférence pendant une durée comprise entre 30 min et 12 heures.

De préférence, ladite étape g) est mise en œuvre à une température comprise entre 70 et 200°C, de manière préférée entre 70 et 180°C, et de manière très préférée entre 80 et 150°C, par exemple pendant une durée comprise entre 30 minutes et 120 heures.

Ladite étape g) de traitement hydrothermal est avantageusement réalisée selon une technique connue de l'homme du métier.

Selon un mode de réalisation préféré, ladite étape g) est réalisée en autoclave, sous pression autogène et sous une atmosphère saturée en eau. De préférence, ladite étape g) est réalisée en introduisant un liquide au fond de l'autoclave, ledit liquide étant choisi parmi l'eau, seule ou l'un quelconque de leurs mélanges avec au moins un acide, une base ou un sel de lithium. De préférence, le matériau mis en forme et séché, et de préférence les extrudés obtenu(s) à l'issue de l'étape g) ne sont pas en contact avec le liquide au fond de l'autoclave.

Dans le cas où de l'eau est introduite dans l'autoclave en mélange avec un acide, l'acide est avantageusement choisi parmi l'acide nitrique, l'acide chlorhydrique, l'acide sulfurique et un acide carboxylique.

Dans le cas où de l'eau est introduite dans l'autoclave en mélange avec une base, la base est avantageusement choisie parmi l'hydroxyde de lithium, l'hydroxyde de sodium, l'hydroxyde de potassium et l'ammoniaque.

Dans le cas où de l'eau est introduite dans l'autoclave en mélange avec un sel de lithium, le sel de lithium est avantageusement choisi parmi le chlorure de lithium et le carbonate de lithium.

De préférence, ladite étape g) est mise en œuvre en présence d'une atmosphère humide comprenant une teneur en eau comprise entre 5 et 50% masse, et de préférence entre 5 et 45% en masse, et de préférence entre 5 et 40% masse.

Selon un mode de réalisation, ladite étape g) peut être réalisée en étuve climatique, en présence d'un flux d'air humide contenant entre 5 et 50% masse d'eau de préférence entre 5 et 45% masse et de manière préférée entre 4 et 40% masse d'eau, ou dans un four opérant sous un flux d'air humide contenant entre 5 et 50% masse d'eau de préférence entre 5 et 45% masse et de manière préférée entre 5 et 40% masse d'eau selon les méthodes connues de l'Homme du métier.

L'étape g) de traitement hydrothermal en atmosphère contrôlée permet l'obtention d'un matériau solide cristallisé de formule $(LiCl)_x.2Al(OH)_3,nH_2O$ avec n étant compris entre 0,01 et 10, x étant compris entre 0,4 et 1, mis en forme de préférence sous forme d'extrudés, présentant une bonne tenue et une bonne résistance mécanique lorsque celui-ci est placé au contact d'une saumure ou d'une solution diluée et de préférence de l'eau.

A l'issue de ladite étape g), le matériau, mis en forme de préférence sous forme d'extrudés, obtenu est ensuite avantageusement récupéré et peut éventuellement être lavé.

Ledit matériau mis en forme et de préférence les extrudés obtenu(s) à l'issue de l'étape g) peu(ven)t ensuite éventuellement être soumis à une étape de séchage h), ladite étape de séchage opérant de préférence à une température comprise entre 15 et 50°C de préférence pendant une durée comprise entre 5 minutes et 12 heures pour obtenir le matériau solide cristallisé de formule $(LiCl)_x.2Al(OH)_3,nH_2O$ avec n étant compris entre 0,01 et 10, x étant compris entre 0,4 et 1, mis en forme.

Ladite étape h) de séchage est avantageusement réalisée selon les techniques connues de l'Homme du métier, et de préférence en étuve ou en four.

Le procédé selon la présente invention permet donc l'obtention d'un matériau solide cristallisé de formule $(LiCl)_x.2Al(OH)_3,nH_2O$ avec n étant compris entre 0,01 et 10, x étant compris entre 0,4 et 1, de préférence sous forme d'extrudés de section (plus grande dimension de la section transversale) ou diamètre compris entre 0,2 et 5 mm, de préférence entre 0,3 et 4 mm, de manière préférée entre 0,3 et 3 mm, de manière très préférée entre 0,3 et 2 mm et de manière encore plus préférée entre 0,3 et 1,8 mm.

Les meilleurs résultats en terme de tenue mécanique et de cohésion du matériau solide cristallisé obtenus selon le procédé de préparation selon l'invention sont obtenus dans le cas d'extrudés ou de billes de section (plus grande dimension de la section transversale) ou diamètre compris entre 0,2 et 5 mm et de préférence compris entre 0,3 et 1,8 mm, lesdits extrudés ayant été obtenus grâce à la combinaison d'une étape de mise en forme spécifique telle que décrite ci-dessus et d'une étape de séchage h) finale réalisée à une température comprise entre 15 et 50°C, et en particulier à 40°C, de préférence pendant une durée comprise entre 5 minutes et 12 heures.

Le matériau solide cristallisé de formule $(LiCl)_x.2Al(OH)_3,nH_2O$ mis en forme, de préférence sous forme d'extrudés ou de billes, préparé selon l'enchainement des étapes a) à h) du procédé de préparation selon l'invention peut être caractérisé selon les techniques suivantes : l'adsorption d'azote pour la détermination de la surface spécifique selon la méthode BET; la diffractométrie de rayons X, dans le domaine d'angle de diffraction $2\Theta = 0,8$ à $40° \pm 0,02°$ en géométrie de réflexion pour identifier la structure dudit matériau et l'analyse élémentaire.

Le diagramme de diffraction de rayon X du matériau sous forme d'extrudés correspond à un solide cristallisé de formule $(LiCl)_x.2Al(OH)_3,nH_2O$ avec x=1 selon la fiche JCPDS n° 0031-07-00, avec n étant compris entre 0,01 et 10, de préférence entre 0,1 et 0,5 de manière préférée entre 0,1 et 5 et de manière très préférée entre 0,1 et 1, obtenu selon l'invention, mis en forme, avantageusement sous forme d'extrudés.

Le procédé de préparation selon la présente invention permet donc l'obtention d'un matériau solide cristallisé de formule $(LiCl)_x.2Al(OH)_3,nH_2O$, n et x ayant la définition précitée mis en forme de préférence sous forme d'extrudés, présentant une bonne cohésion, et n'ayant pas de défaut apparent et présentant une bonne tenue et une bonne résistance mécanique lorsque celui-ci est placé au contact d'une saumure ou d'une solution diluée et de préférence dans l'eau.

Les bonnes propriétés du matériau obtenu résultent de l'effet combiné de mise en forme de préférence par extrusion d'une pâte, en l'absence de liant, directement, après une étape de séchage opérant dans des conditions spécifiques, de la mise en œuvre d'une étape de séchage suivant la mise en forme, opérant également dans des conditions spécifiques et éventuellement de la mise en œuvre d'une étape de traitement hydrothermal final opérant de préférence en autoclave.

Par ailleurs, le matériau solide cristallisé mis en forme, de préférence sous forme d'extrudés, ainsi obtenu de formule $(LiCl)_x.2Al(OH)_3,nH_2O$ avec n et x ayant la définition précitée, présente une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Les matériaux obtenus selon l'invention présentent une capacité d'adsorption améliorée par rapport aux matériaux de l'art antérieur supérieure à 6 mg de Li/g de matériau solide sec, c'est-à-dire de matériau solide séché à 200 °C, de préférence comprise entre 6 et 10 mg de Li/g, de manière préférée entre 6 et 8 mg de Li/g de matériau solide sec.

La présente invention a également pour objet un procédé d'extraction du lithium à partir d'une solution saline utilisant ledit matériau solide cristallisé de formule $(LiCl)_x.2Al(OH)_3,nH_2O$ avec n étant compris entre 0,01 et 10, x étant compris entre 0,4 et 1, préparé selon l'invention.

Ladite solution saline utilisée dans le procédé d'extraction selon l'invention comprend avantageusement une concentration en lithium comprise entre 0,001 mol/L et 0,5 mol/L, de préférence entre 0,02 mol/L et 0,3 mol/L.

Ladite solution saline contient également d'autres espèces, telles que par exemple les espèces choisies parmi la liste suivante : Na, K, Rb, Cs, Mg, Ca, Sr, Ba, F, Cl, Br, I, $SO_4$, $CO_3$, $NO_3$, et $HCO_3$. Ladite solution saline peut avantageusement être saturée en sels ou non.

Ladite solution saline peut être toute solution saline naturelle, concentrée ou issue d'un procédé d'extraction ou de transformation du lithium. Par exemple, ladite solution saline utilisée dans le procédé d'extraction selon l'invention peut avantageusement être choisie parmi les saumures de lacs salés ou de sources géothermales, les saumures soumises à une évaporation pour obtenir des saumures concentrées en lithium, l'eau de mer, les effluents des usines de production de cathodes, ou de production de chlorure ou d'hydroxyde de lithium et les effluents des procédé d'extraction du lithium à partir de minéraux.

Le procédé d'extraction du lithium selon l'invention est de préférence un procédé d'extraction sélective du lithium. En effet, il permet la séparation du lithium des métaux alcalins, de préférence le sodium (Na), et le potassium (K) et des alcalino-terreux, de préférence le magnésium (Mg), le calcium (Ca) et le strontium (Sr), présents en quantité massive dans les solutions salines traitées dans ledit procédé d'extraction.

Le procédé d'extraction du lithium selon l'invention permet également la séparation sélective du lithium des autres composés tels que le bore et les sulfates.

Le procédé d'extraction du lithium selon l'invention est avantageusement mis en œuvre dans une unité comprenant au moins une colonne, la ou lesdites colonnes comprenant au moins un lit dudit matériau solide cristallisé de formule $(LiCl)_x.2Al(OH)_3,nH_2O$, avec n, et x ayant la définition précitée, mis en forme et préparé selon le procédé de préparation selon l'invention.

De préférence, ledit procédé d'extraction du lithium selon l'invention est mis en œuvre dans une unité comprenant au moins deux colonnes, et de manière préférée entre deux et trois colonnes, comprenant au moins un lit du matériau solide cristallisé de formule $(LiCl)_x.2Al(OH)_3,nH_2O$, avec n, et x ayant la définition précitée.

Ledit procédé d'extraction du lithium comprend avantageusement au moins les étapes suivantes :

- une étape d'activation dudit matériau solide cristallisé de formule $(LiCl)_x.2Al(OH)_3,nH_2O$, avec n et x ayant la définition précitée,
- une étape de chargement dudit matériau activé par adsorption réalisée par passage de ladite solution saline sur ledit matériau activé,
- éventuellement au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

De préférence, le procédé d'extraction du lithium selon l'invention comprend une étape préalable de mise en colonne dudit matériau.

De préférence, ledit procédé d'extraction comprend une étape optionnelle de lavage de la solution saline imprégnant ledit matériau par passage d'une solution de lavage sur ledit matériau, ladite étape de lavage étant de préférence mise en œuvre entre l'étape de chargement et l'étape de désorption.

De préférence, ladite étape d'activation du matériau solide cristallisé de formule $(LiCl)_x.2Al(OH)_3,nH_2O$, avec n et x ayant la définition précitée, de préférence mis en forme, et de préférence sous forme d'extrudés ou de billes, est réalisée une seule fois lors de la mise en colonne du matériau synthétisé et mis en forme selon le procédé de préparation selon l'invention.

Ladite étape d'activation permet d'activer les sites destinés à adsorber sélectivement le lithium.

De préférence, ladite étape d'activation est avantageusement réalisée par le passage d'une solution d'activation choisi parmi l'eau et une solution de sel de lithium ayant une concentration comprise entre 0,001 mol/L et 0,1 mol/L, de préférence entre 0,001 mol/L et 0,05 mol/L et de manière préférée entre 0,01 et 0,04 mol/L.

De manière préférée, le sel de lithium utilisé en solution dans ladite étape d'activation est choisi parmi le chlorure de lithium (LiCl), le nitrate de lithium et le bromure de lithium.

De manière très préférée, le sel de lithium utilisé en solution dans ladite étape d'activation est le chlorure de lithium (LiCl).

Ladite étape d'activation est avantageusement réalisée à une température comprise entre 0°C et 90°C, et de préférence entre 10°C et 60°C, et de manière préférée entre 10°C et 30°C avec un temps de séjour de ladite solution d'activation dans la colonne de préférence compris entre 0,03 et 10 h, et de préférence entre 0,06 et 1 h.

La quantité de solution nécessaire à l'activation est avantageusement comprise entre 1 et 30 volumes de colonne, de préférence entre 2 et 20 volumes de colonne.

Le volume de colonne ou « Bed Volume » selon la terminologie anglo-saxonne est également appelé volume occupé par le lit du solide dans la colonne ou BV selon la terminologie propre au domaine technique connu de l'Homme du métier.

Ledit matériau solide cristallisé peut éventuellement subir préalablement à l'étape d'activation une étape de lavage avec une solution de lavage et de préférence une solution de chlorure de lithium (LiCl) ou un mélange de chlorure de lithium (LiCl) et de chlorure de sodium (NaCl).

Ladite étape de chargement dudit matériau activé par adsorption est avantageusement réalisée par passage de la solution saline traitée dans le procédé d'extraction selon l'invention, sur ledit matériau activé.

Ladite étape de chargement est avantageusement effectuée à une température comprise entre 0°C et 90°C, et de préférence entre 10°C et 70°C avec un temps de séjour de ladite solution, de préférence de ladite solution saline traitée, dans la colonne de préférence compris entre 0,03 et 10 h, et de préférence entre 0,06 et 1 h 30 minutes.

La quantité de solution nécessaire pour saturer ledit matériau dépend de la capacité d'adsorption dudit matériau et de la concentration en lithium de la solution saline.

La capacité d'adsorption des matériaux selon l'invention est supérieure à 6 mg de Li/g de matériau solide sec, et de manière préférée entre 6 et 8 mg de Li/g de matériau solide sec.

Dans le cas où ledit procédé d'extraction du lithium selon l'invention est mis en œuvre dans une unité comprenant deux colonnes, la première colonne est avantageusement saturée par le lithium lors de ladite étape de chargement. La deuxième colonne, recevant le flux de sortie de la première colonne, est avantageusement chargée jusqu'à l'obtention d'une fuite en lithium ne dépassant pas 10% de la concentration en lithium du flux d'entrée et de préférence 5%, permettant ainsi de maximiser le rendement de récupération en lithium.

Dans le cas où ledit procédé d'extraction du lithium selon l'invention est mis en œuvre dans une unité comprenant trois colonnes, la troisième colonne, déjà saturée en lithium, est consacrée aux étapes de lavage puis de désorption du lithium, décrites ci-après, pendant le chargement des deux autres colonnes.

La première fraction du flux de sortie de ladite étape de chargement par adsorption, avantageusement entre 0 et 1 volumes de colonne, correspond à l'élimination de l'imprégnant issu de l'étape d'activation du matériau solide. Cette fraction peut être considérée comme un effluent ou recyclé, et de préférence recyclée comme flux d'entrée de l'étape de désorption. Dans le cas du traitement d'une saumure naturelle ou d'eau de mer, au-delà de 1 volume de colonne, l'intégralité du flux de sortie de ladite étape de chargement par adsorption, appelé ci-après raffinat qui n'a subi aucun traitement chimique, est avantageusement et de préférence renvoyé vers le gisement de solution saline d'origine.

A l'issue de l'étape de chargement par passage de la solution saline traitée dans le procédé selon l'invention sur le matériau activé, la solution saline imprègne ledit matériau activé.

La solution saline imprégnant le matériau activé est éventuellement lavée dans au moins une étape de lavage par passage d'une solution de lavage sur ledit matériau.

Ladite ou lesdites étape(s) de lavage de la solution saline imprégnant ledit matériau, est (sont) avantageusement réalisée(s) par passage ascendant ou descendant d'une solution de lavage sur ledit matériau, et de préférence descendant.

De préférence, ladite solution de lavage est choisie parmi l'eau et une solution aqueuse de sel de sodium et de préférence de chlorure de sodium (NaCl), comprenant éventuellement un sel de lithium et de préférence le chlorure de lithium (LiCl), ladite solution présentant avantageusement une concentration en sel de sodium et de préférence en chlorure de sodium (NaCl), supérieure à 0,5 mol/L, de préférence comprise entre 1 mol/L et la saturation et une concentration en sel de lithium et de préférence en chlorure de lithium (LiCl), comprise entre 0 mol/L et 2 mol/L.

Ladite étape de lavage est avantageusement réalisée à une température comprise entre 0°C et 90°C, et de préférence entre 10°C et 70°C, et avec un temps de séjour de ladite solution, de préférence de ladite solution de lavage dans la colonne compris entre 0,03 et 10 h, et de préférence entre 0,06 et 1 h. La quantité de solution nécessaire au lavage est comprise entre 0,1 et 10 volumes de colonne, et de préférence dans la gamme 0,5 à 5 volumes de colonne.

Le flux de sortie de ladite étape de lavage est considéré comme un effluent ou est avantageusement recyclé, et de préférence recyclé à l'entrée de l'étape de chargement ou directement à l'entrée de la deuxième colonne dans le cas où ledit procédé d'extraction du lithium selon l'invention est mis en œuvre dans une unité comprenant au moins deux colonnes.

Ladite étape de lavage permet le lavage de la solution saline imprégnée dans ledit matériau lors de l'étape de chargement dudit matériau par adsorption, tout en limitant la désorption du lithium.

Dans le cas où ladite solution de lavage est une solution aqueuse concentrée de chlorure de sodium (NaCl), ladite étape de lavage permet non seulement d'éliminer la solution saline imprégnée dans ledit matériau lors de l'étape de chargement dudit matériau par adsorption mais aussi de désorber les éléments tels que le bore, les sulfates, les alcalins autres que le lithium et le sodium et les alcalino-terreux.

L'étape de désorption du lithium est ensuite réalisée par passage d'eau ou d'une solution aqueuse de chlorure de lithium (LiCl) sur ledit matériau à l'issue de l'étape de lavage pour obtenir un éluat comprenant au moins du lithium.

De préférence, ladite étape de désorption est réalisée par passage ascendant ou descendant, et de préférence descendant, d'une solution de désorption choisie parmi l'eau et une solution de chlorure de lithium (LiCl) contenant de 0,001 mol/L à 2 mol/L de LiCl, et de préférence de 0,01 mol/L à 1 mol/L.

Ladite étape de désorption est avantageusement réalisée à une température comprise entre 0°C et 90°C, et de préférence entre 10°C et 70°C à avec un temps de séjour de ladite solution de désorption dans la colonne de préférence compris entre 0,03 et 10 h, et de préférence entre 0,06 et 1 h.

La quantité de solution de chlorure de lithium (LiCl) nécessaire à la désorption est avantageusement comprise entre 0,01 et 10 volumes de colonne, et de préférence entre 0,05 et 5 volumes de colonne.

Le flux de sortie de ladite étape de désorption du lithium génère le produit final du procédé, appelé éluat.

L'éluat est avantageusement récupéré entre 0 et 4 volumes de colonne, et de préférence entre 0,2 et 3 volumes de colonne.

L'ensemble des autres fractions du flux de sortie de cette étape ne constituant pas le produit final appelé éluat, est considéré comme un effluent ou est avantageusement recyclé, et de préférence recyclé à l'entrée de l'étape de chargement, de lavage ou d'élution.

L'éluat obtenu à l'issue du procédé d'extraction selon l'invention est une solution contenant majoritairement les éléments Li, Na et Cl ainsi que des impuretés de préférence choisies parmi K, Mg, Ca, Sr, B ou $SO_4$.

L'éluat est ensuite avantageusement concentré et purifié pour obtenir un sel de lithium de haute pureté.

Ledit procédé d'extraction du lithium selon l'invention permet l'extraction sélective du lithium à partir d'une solution saline et permet ainsi d'obtenir un facteur d'épuration élevé par rapport à la solution saline initiale, calculé comme étant le rapport X/Li qui est égal au rapport molaire de concentration X/Li dans la solution saline initiale divisé par le rapport molaire de concentration X/Li dans l'éluat, X étant choisi parmi le sodium (Na), le potassium (K), le magnésium (Mg), le calcium (Ca), le bore (B), le soufre (S) et le strontium (Sr).

<u>Description des figures :</u>

La figure 1 représente le diagramme de diffraction des rayons X des boehmites précipitées obtenues dans les exemples 1 à 4.
La figure 3 représente le diagramme de diffraction des rayons X de la boehmite précipitée obtenue dans l'exemple 5.

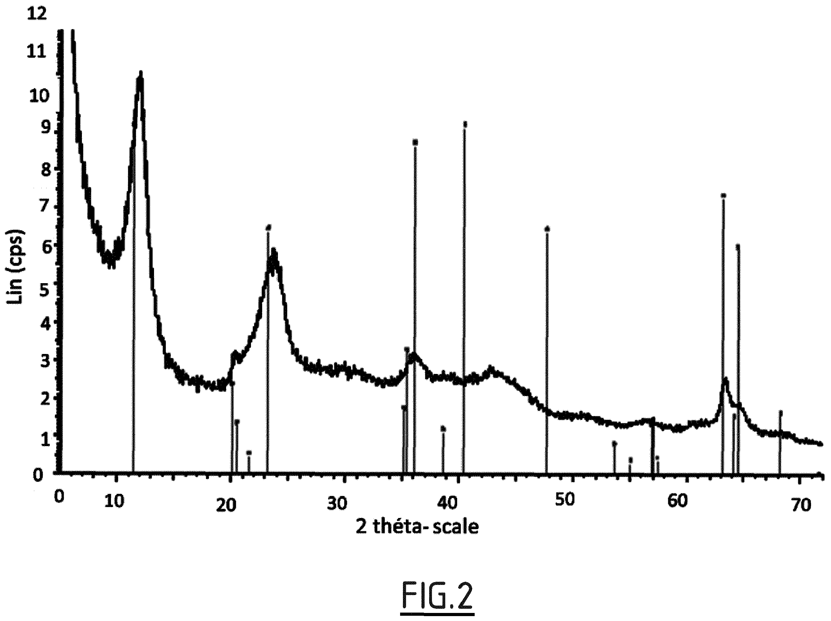

La figure 2 représente le diagramme de diffraction des rayons X des matériaux solides finaux obtenus sous forme d'extrudés respectivement dans les exemples 1 à 4.

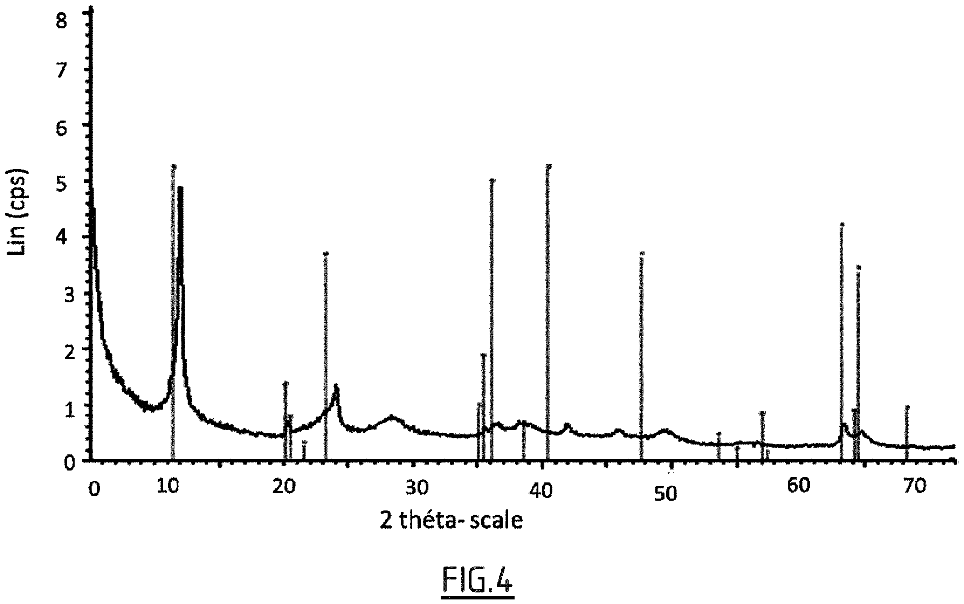

La figure 4 représente le diagramme de diffraction des rayons X du matériau solide final obtenu sous forme d'extrudés dans l'exemple 5.

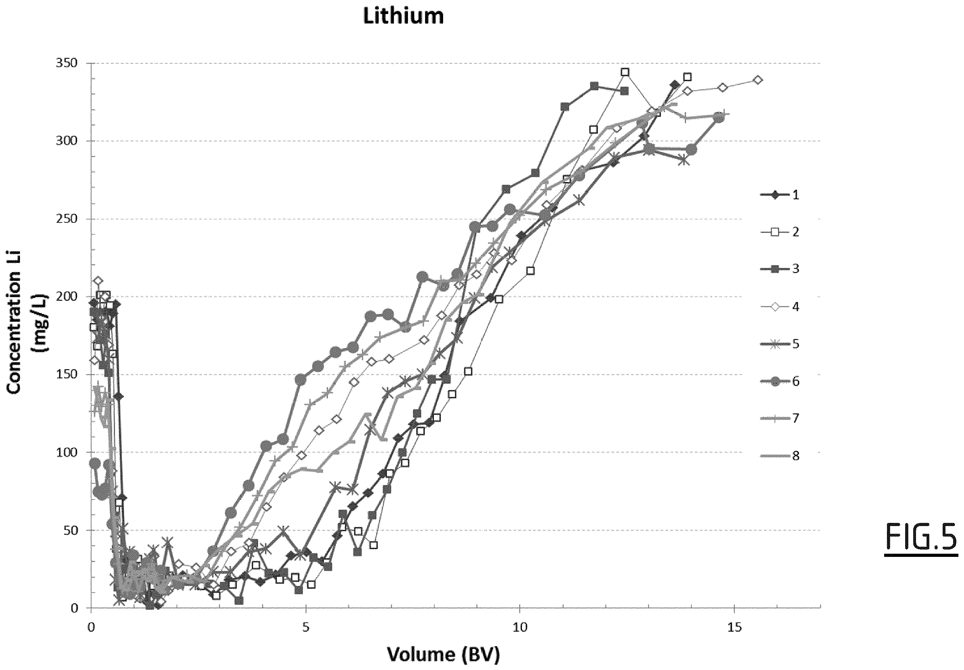

La figure 5 représente la courbe de saturation selon l'exemple 9, réalisée à partir des extrudés obtenus aux exemples 1 à 8.

L'invention est illustrée par les exemples suivants qui ne présentent, en aucun cas, un caractère limitatif.

**Exemples:**

Exemple 1 : (selon l'invention) :

On prépare un matériau solide de formule $(LiCl)_x.2Al(OH)_3,nH_2O$ avec n étant compris entre 0,01 et 1 et x = 0,6, selon un procédé de synthèse conforme à l'invention, dans lequel l'étape b) de mise en contact est réalisée avec un ratio Li/Al de 0,5 et l'étape de mise en forme est mise en œuvre par malaxage - extrusion acide.

1/ précipitation de boehmite AlOOH

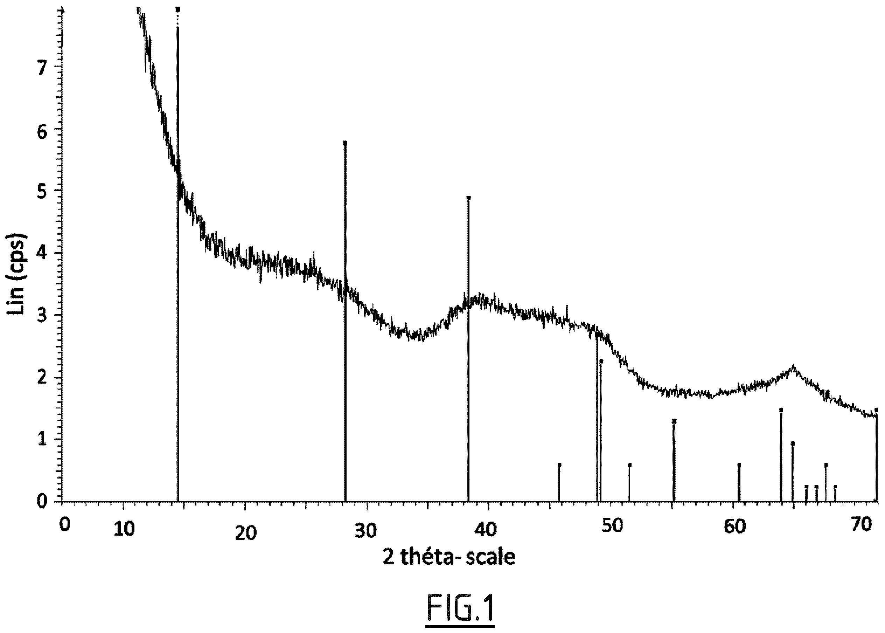

Dans un bêcher refroidi par un bain de glace, une solution contenant 326 ml d'eau permutée et 135,6 g de chlorure d'aluminium hexahydraté $(AlCl_3.6H_2O)$ est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bêcher de 3 L avec 320 mL d'eau.
Un échantillon du précipité obtenu est prélevé du milieu réactionnel. La DRX (figure 1) du précipité montre que le précipité obtenu dans l'exemple 1 est bien un précipité de boehmite. Le précipité de boehmite obtenu dans l'exemple 1 est peu cristallisé.
La taille des cristallites de la boehmite obtenue est mesurée selon la méthode de Sherrer :

$$\text{Taille selon } [020] = 0,6 \pm 0,1 \text{ (nm)}$$

$$; \text{Taille selon } [120] = 1,4 \pm 0,1 \text{ (nm)}$$

2/ Addition du chlorure de lithium LiCl.

On prépare une solution contenant 11,9 g de chlorure de lithium LiCl fourni par la société Prolabo, ceci correspond à un ratio molaire Li/Al de 0,5, et 1326 ml d'eau qui est additionnée au gâteau repulpé. Ce milieu réactionnel est agité et chauffé à 80°C pendant 2 h.
Une filtration puis un séchage en étuve à 80°C pendant 8h suivent les 2 premières étapes.
Le matériau solide ainsi préparé se caractérise par la formule $(LiCl)x.2Al(OH)_3,nH_2O$ avec n = 0,25 et x = 0,6 selon un procédé de synthèse conforme à l'invention.
L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,88 g de solution d'acide oxalique à 100 g/L ce qui correspond à 1% poids d'acide oxalique par rapport à la matière sèche, la matière sèche étant la masse de ladite pate issue du séchage précédent, séchée en étuve à 200°C pendant 6h. Un complément d'eau d'environ 4,7g est ajouté afin d'obtenir une pâte cohésive, homogène et extrudable. Le malaxage est poursuivi à la même vitesse pendant 20 minutes après la fin de l'ajout d'acide et d'eau.
La pâte obtenue est mise en forme à l'aide d'une extrudeuse piston (MTS), équipée d'une filière cylindrique de 1 mm de diamètre.
Des extrudés du matériau solide présentant une bonne cohésion et un aspect correct sont obtenus. Une phase $LiCl.2Al(OH)_3,nH_2O$ est détectée sur le diagramme de diffraction des rayons X des extrudés du matériau solide de formule $LiCl.2Al(OH)_3,nH_2O$ avec n = 0,25 obtenu à l'exemple 1 (figure 2).
Les extrudés obtenus sont également caractérisés par les mesures suivantes :

L'analyse élémentaire montre une bonne stœchiométrie Li/Al/Cl correspondant à la composition d'une structure $(LiCl)_{0,6}.2Al(OH)_3,nH_2O$.
Al= 24,8 % masse ; Li= 1,9 % masse ; Cl;= 9,8 % masse.
Les extrudés obtenus selon l'exemple 1 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

Exemple 2 : (selon l'invention) :

On prépare un matériau solide de formule $(LiCl)_x.2Al(OH)_3,nH_2O$ avec n étant compris entre 0,01 et 1 et x = 0,6, selon un procédé de synthèse conforme à l'invention, dans lequel l'étape b) de mise en contact est réalisée avec un ratio Li/Al de 0,5 et l'étape de mise en forme est mise en œuvre par malaxage - extrusion acide.

### 1/ précipitation de boehmite AlOOH

Dans un bêcher refroidi par un bain de glace, une solution contenant 326 ml d'eau permutée et 135,6 g de chlorure d'aluminium hexahydraté ($AlCl_3$,$6H_2O$) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bêcher de 3 L avec 320 mL d'eau.

Un échantillon du précipité obtenu est prélevé du milieu réactionnel. La DRX (figure 1) du précipité montre que le précipité obtenu dans l'exemple 1 est bien un précipité de boehmite. Le précipité de boehmite obtenu dans l'exemple 1 est peu cristallisé.

La taille des cristallites de la boehmite obtenue est mesurée selon la méthode de Sherrer :

$$\text{Taille selon } [020] = 0{,}6 \pm 0{,}1 \text{ (nm)}$$

$$\text{Taille selon } [120] = 1{,}4 \pm 0{,}1 \text{ (nm)}$$

### 2/ Addition du chlorure de lithium LiCl.

On prépare une solution contenant 11,9 g de chlorure de lithium LiCl fourni par la société Prolabo, ceci correspond à un ratio molaire Li/Al de 0,5, et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule $(LiCl)x.2Al(OH)_3,nH_2O$ avec n = 0,25 et x = 0,6 selon un procédé de synthèse conforme à l'invention.

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 0,33 g de solution d'acide phosphorique à 85% ce qui correspond à 0,5% poids d'acide phosphorique par rapport à la matière sèche, la matière sèche étant la masse de ladite pate issue du séchage précédent, séchée en étuve à 200°C pendant 6h. Un complément d'eau d'environ 8,2 g est ajouté afin d'obtenir une pâte cohésive, homogène et extrudable. Le malaxage est poursuivi à la même vitesse pendant 20 minutes après la fin de l'ajout d'acide et d'eau.

La pâte obtenue est mise en forme à l'aide d'une extrudeuse piston (MTS), équipée d'une filière cylindrique de 1 mm de diamètre.

Des extrudés du matériau solide présentant une bonne cohésion et un aspect correct sont obtenus. Une phase $LiCl.2Al(OH)_3,nH_2O$ est détectée sur le diagramme de diffraction des rayons X des extrudés du matériau solide de formule $LiCl.2Al(OH)_3,nH_2O$ avec n = 0,25 obtenu à l'exemple 2 (figure 2).

Les extrudés obtenus sont également caractérisés par les mesures suivantes :

L'analyse élémentaire montre une bonne stœchiométrie Li/Al/Cl correspondant à la composition d'une structure $(LiCl)_{0,6}.2Al(OH)_3,nH_2O$.
Al= 24,8 % masse ; Li= 1,9 % masse ; Cl;= 9,8 % masse.
Les extrudés obtenus selon l'exemple 2 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 3 : (comparatif avec malaxage extrusion basique) :

On prépare un matériau solide de formule $(LiCl)x.2Al(OH)_3,nH_2O$ avec n étant compris entre 0,01 et 1 et x = 0,6, selon un procédé de synthèse conforme à l'invention, dans lequel l'étape b) de mise en contact est réalisée avec un ratio molaire Li/Al de 0,5 et l'étape de mise en forme est mise en œuvre par malaxage extrusion basique.

### 1/ précipitation de boehmite AIOOH

Dans un bêcher refroidit par un bain de glace, une solution contenant 326 ml d'eau permutée et 135,6 g de chlorure d'aluminium hexahydraté (AlCl$_3$) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité est identique à la DRX obtenue dans l'exemple 1 (cf figure 1) et montre que le précipité obtenu dans l'exemple 3 est bien un précipité de boehmite. Le précipité de boehmite obtenu dans l'exemple 3 est peu cristallisé.

La taille des cristallites de la boehmite obtenue est mesurée selon la méthode de Sherrer :

$$\text{Taille selon [020]} = 0,6 \pm 0,1 \ (nm) ;$$

$$\text{Taille selon [120]} = 1,4 \pm 0,1 \ (nm)$$

### 2/ Addition du chlorure de lithium LiCl.

On prépare une solution contenant 11,9 g de chlorure de lithium LiCl fourni par la société Prolabo, ceci correspond à un ratio Li/Al de 0,5 et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

### 3/ Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,39g de solution ammoniacale à 20,18% poids ce qui correspond à 1% poids de base (NH$_4$OH) par rapport à la matière sèche, la matière sèche étant la masse de ladite pate issue du séchage précédent, séchée en étuve à 200°C pendant 6h. La solution ammoniacale est mélangée avec 16g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés du matériau solide obtenu à l'exemple 3 présente une bonne cohésion et un aspect correcte. D'après le diagramme de diffraction des rayons X, une phase LiCl.2Al(OH)$_3$,nH$_2$O est détectée.

La DRX du matériau final est identique à la DRX du matériau obtenu à l'exemple 1 (cf figure 2).

Les extrudés obtenus sont également caractérisés par les mesures suivantes :

L'analyse élémentaire montre une bonne stœchiométrie Li/Al/Cl correspondant à la composition d'une structure (LiCl)$_{0,6}$.2Al(OH)$_3$,nH$_2$O

Al= 24,8 % masse ; Li= 1,9 % masse ; Cl;= 9,8 % masse.

Les extrudés obtenus selon l'exemple 3 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 4 : (selon l'invention) :

On prépare un matériau solide de formule (LiCl)x.2Al(OH)$_3$,nH$_2$O avec n étant compris entre 0,01 et 1 et x = 1, selon un procédé de synthèse non conforme à l'invention, en ce que l'étape b) de mise en contact est réalisée avec un ratio Li/Al de 3,3. L'étape de mise en forme est mise en œuvre par malaxage extrusion acide.

### 1/ précipitation de boehmite AIOOH

Dans un bêcher refroidit par un bain de glace, une solution contenant 326 ml d'eau permutée et 135,6 g de chlorure d'aluminium hexahydraté (AlCl$_3$) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bécher de 3 L avec 320 mL d'eau.

Un échantillon du précipité obtenu est prélevé du milieu réactionnel. La DRX du précipité montre que le précipité obtenu dans l'exemple 4 est bien un précipité de boehmite (figure 1). Le précipité de boehmite obtenu dans l'exemple 4 est peu cristallisé.

La taille des cristallites de la boehmite obtenue est mesurée selon la méthode de Sherrer :

$$\text{Taille selon [020]} = 0,6 \pm 0,1 \text{ (nm)} ;$$

$$\text{Taille selon [120]} = 1,4 \pm 0,1 \text{ (nm)}$$

2/ Addition du chlorure de lithium LiCl.

On prépare une solution contenant 78,5 g de chlorure de lithium LiCl fourni par la société Prolabo, ceci correspond à un ratio Li/Al de 3,3, et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

3/Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,88 g de solution d'acide oxalique à 100 g/L ce qui correspond à 1% poids d'acide oxalique par rapport à la matière sèche, la matière sèche étant la masse de ladite pate issue du séchage précédent, séchée en étuve à 200°C pendant 6h. Un complément d'eau d'environ 4,7g est ajouté afin d'obtenir une pâte cohésive, homogène et extrudable. Le malaxage est poursuivi à la même vitesse pendant 20 minutes après la fin de l'ajout d'acide et d'eau.

La pâte obtenue est mise en forme à l'aide d'une extrudeuse piston (MTS), équipée d'une filière cylindrique de 1 mm de diamètre.

Des extrudés du matériau solide de formule (LiCl)$_x$.2Al(OH)$_3$,nH$_2$O avec n = 0,25 et x = 1 présentant une bonne cohésion et un aspect correct sont obtenus. Une phase LiCl.2Al(OH)$_3$,nH$_2$O est détectée sur le diagramme de diffraction des rayons X des extrudés du matériau solide de formule (LiCl)$_x$.2Al(OH)$_3$,nH$_2$O avec n = 0,25 et x = 1 obtenu à l'exemple 4. La DRX du matériau final est identique à la DRX du matériau obtenu à l'exemple 1 (cf figure 2).

Les extrudés obtenus sont également caractérisés par les mesures suivantes :

L'analyse élémentaire montre une bonne stœchiométrie Li/Al/Cl correspondant à la composition d'une structure LiCl.2Al(OH)$_3$,nH$_2$O

Al= 23 % masse ; Li= 3 % masse ; Cl;= 15,1 % masse.

Les extrudés obtenus selon l'exemple 4 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

Exemple 5: (comparatif : extrusion directe sans malaxage acide) :

On prépare un matériau solide de formule (LiCl)$_x$.2Al(OH)$_3$,nH$_2$O avec n étant compris entre 0,01 et 1 et x = 1 selon un procédé de synthèse non conforme à l'invention en ce que l'étape de mise en forme est mise en œuvre par extrusion directe, sans malaxage acide.

1/ précipitation de boehmite AlOOH

Dans un bécher refroidit par un bain de glace, une solution contenant 326 ml d'eau permutée et 135,6 g de chlorure d'aluminium hexahydraté (AlCl$_3$) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bécher de 3 L avec 320 mL d'eau.

Un échantillon du précipité obtenu est prélevé du milieu réactionnel. La DRX (figure 1) du précipité montre que le précipité obtenu dans l'exemple 5 est bien un précipité de boehmite. Le précipité de boehmite obtenu dans l'exemple 5 est peu cristallisé.

La taille des cristallites de la boehmite obtenue est mesurée selon la méthode de Sherrer : Taille selon [020] = 2,1 $\pm$ 2 (nm) ; Taille selon [120]=2,8 $\pm$ 3 (nm)

### 2/ Addition du chlorure de lithium LiCl.

On prépare une solution contenant 11,9 g de chlorure de lithium LiCl fourni par la société Prolabo, ceci correspond à un ratio Li/Al de 0,5 et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule $(LiCl)_x.2Al(OH)_3,nH_2O$ avec n = 0,25 et x = 1 selon un procédé de synthèse conforme à l'invention. L'étape de mise en forme de la pâte obtenue est réalisée directement après l'étape de séchage, sans étape de malaxage préalable et en l'absence de liant. La pâte obtenue est mise en forme à l'aide d'une extrudeuse piston (MTS), équipée d'une filière cylindrique de 1 mm de diamètre.

Des extrudés du matériau solide de formule $(LiCl)_x.2Al(OH)_3,nH_2O$ avec n = 0,25 et x = 0,6 présentant une bonne cohésion et un aspect correcte sont obtenus. Une phase $(LiCl)_x.2Al(OH)_3,nH_2O$ est détectée sur le diagramme de diffraction des rayons X des extrudés du matériau solide de formule $(LiCl)_x.2Al(OH)_3,nH_2O$ avec n = 0,25 et x = 0,6 obtenu à l'exemple 5.

La DRX du matériau final est représenté sur la figure 2.

Les extrudés obtenus sont également caractérisés par les mesures suivantes :

L'analyse élémentaire montre une bonne stœchiométrie Li/Al/Cl correspondant à la composition d'une structure $(LiCl)_{0,6}.2Al(OH)_3,nH_2O$

Al= 24,8 % masse ; Li= 1,9 % masse ; Cl;= 9,8 % masse.

Les extrudés obtenus selon l'exemple 5 présentent visuellement une bonne cohésion, ne présentent pas ou peu de fissures. Cependant, lorsqu'ils sont soumis au test de résistance décrit ci-dessus, ils présentent une cohésion et une tenue mécanique moins bonnes que le matériau obtenu dans l'exemple 1 selon l'invention lorsque ceux-ci sont mis au contact d'une saumure (pourcentage de destruction environ de 35% lors du test de cohésion) ou d'eau (pourcentage de destruction environ de 45% lors du test de cohésion).

### Exemple 6 : comparatif (précipitation boehmite à pH=10, et extrusion directe sans malaxage acide) :

On prépare un matériau solide de formule $(LiCl)_x.2Al(OH)_3,nH_2O$ avec n étant compris entre 0,01 et 1 et x = 0,6 selon un procédé de synthèse non conforme à l'invention en ce que l'étape de précipitation de boehmite est réalisée à pH = 10. L'étape b) de mise en contact est réalisée avec un ratio Li/Al = 0,5.

### 1/ précipitation de boehmite AIOOH

Dans un bécher refroidit par un bain de glace, une solution contenant 326 ml d'eau permutée et 135,6 g de chlorure d'aluminium hexahydraté $(AlCl_3)$ est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 10. La température est maintenue à 20°C pendant toute la durée de l'étape de précipitation. Ce gâteau est mis en suspension dans un bécher de 3 L avec 320 mL d'eau.

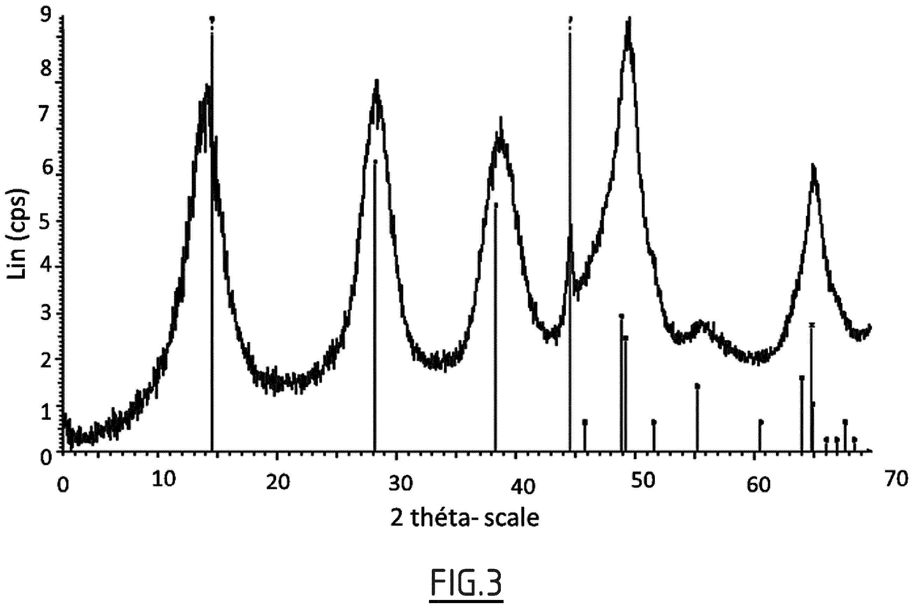

Un échantillon du précipité obtenu est prélevé du milieu réactionnel. La DRX du précipité montre que le précipité obtenu dans l'exemple 6 est bien un précipité de boehmite très bien cristallisé (cf figure 3).

La taille des cristallites de la boehmite obtenue est mesurée selon la méthode de Sherrer : Taille selon [020] = 2,1 $\pm$ 2 (nm) ; Taille selon [120]=2,8 $\pm$ 3 (nm)

### 2/ Addition du chlorure de lithium LiCl.

On prépare une solution contenant 11,9 g de chlorure de lithium LiCl fourni par la société Prolabo ceci correspond à un ratio Li/Al de 0,5 et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule $(LiCl)_x.2Al(OH)_3,nH_2O$ avec n = 0,25 et x = 0,6

selon un procédé de synthèse conforme à l'invention. L'étape de mise en forme de la pâte obtenue est réalisée directement après l'étape de séchage, sans étape de malaxage préalable et en l'absence de liant. La pâte obtenue est mise en forme à l'aide d'une extrudeuse piston (MTS), équipée d'une filière cylindrique de 1 mm de diamètre.

Des extrudés du matériau solide de formule $(LiCl)_x.2Al(OH)_3,nH_2O$ avec n = 0,25 et x = 0,6 présentant une bonne cohésion et un aspect correcte sont obtenus. Une phase $(LiCl)_x.2Al(OH)_3,nH_2O$ est détectée sur le diagramme de diffraction des rayons X des extrudés du matériau solide de formule $(LiCl)_x.2Al(OH)_3,nH_2O$ avec n = 0,25 et x = 1 obtenu à l'exemple 6.

La DRX du matériau final est représenté sur la figure 4.

Les extrudés obtenus sont également caractérisés par les mesures suivantes :

L'analyse élémentaire montre une bonne stœchiométrie Li/Al/Cl correspondant à la composition d'une structure $(LiCl)_{0,6}.2Al(OH)_3,nH_2O$
Al= 24,8 % masse ; Li= 1,9 % masse ; Cl;= 9,8 % masse.

Les extrudés obtenus selon l'exemple 6 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

Exemple 7 comparatif (extrusion - malaxage acide avec un liant précurseur solide d'alumine) :

On prépare un matériau solide de formule $(LiCl)_x.2Al(OH)_3,nH_2O$ avec n étant compris entre 0,01 et 1 et x = 0,6, selon un procédé de synthèse conforme à l'invention dans lequel l'étape b) de mise en contact est réalisée avec un ratio Li/Al de 0,5 mais l'étape e) de mise en forme est mise en œuvre par malaxage - extrusion acide en présence d'un liant précurseur solide d'alumine.

1/ Précipitation de boehmite AlOOH

Dans un bécher refroidi par un bain de glace, une solution contenant 326 ml d'eau permutée et 135,6 g de chlorure d'aluminium hexahydraté $(AlCl_3,6H_2O)$ est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bécher de 3 L avec 320 mL d'eau.

Un échantillon du précipité obtenu est prélevé du milieu réactionnel. Le précipité obtenu est un précipité de boehmite. Le précipité de boehmite obtenu dans l'exemple 7 présente des cristallites de faible taille (appelés également précipité « peu cristallisé »).

La taille des cristallites de la boehmite obtenue est mesurée selon la méthode de Sherrer :
Taille selon [020] = 0,6 $\pm$ 0,1 (nm) ; Taille selon [120]=1,4 $\pm$ 0,1 (nm)

2/ Addition du chlorure de lithium LiCl.

On prépare une solution contenant 11,9 g de chlorure de lithium LiCl fourni par la société Prolabo, ceci correspond à un ratio molaire Li/Al de 0,5, et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule $(LiCl)x.2Al(OH)_3,nH_2O$ avec n = 0,25 et x = 0,6 selon un procédé de synthèse conforme à l'invention.

L'étape de mise en forme est réalisée par malaxage (en présence d'un précurseur solide d'alumine, la boehmite) puis extrusion. Pour l'étape de malaxage, 35,5g de pâte obtenues ci-dessus, est introduit dans un malaxeur de type Brabender (volume cuve 80 mL) avec 6,9 g d'acide phosphorique 85% masse et 4,7 g d'une poudre de boehmite Pural SB3 représentant 25% masse de précurseur solide d'alumine par rapport à la masse sèche de pâte, la matière sèche étant la masse de ladite pâte issue du séchage précédent, séchée en étuve à 200°C pendant 6h.

Un complément d'eau d'environ 5,4 g est ajouté afin d'obtenir une pâte cohésive, homogène et extrudable. Le malaxage est poursuivi à la même vitesse pendant 20 minutes après la fin de l'ajout de boehmite, d'acide et d'eau.

La pâte obtenue est mise en forme à l'aide d'une extrudeuse piston (MTS), équipée d'une filière cylindrique de 1 mm de diamètre.

Des extrudés du matériau solide présentant une bonne cohésion et un aspect correct sont obtenus. Une phase

LiCl.2Al(OH)$_3$,nH$_2$O est détectée sur le diagramme de diffraction des rayons X des extrudés.

Les extrudés obtenus selon l'exemple 7 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

Exemple 8 comparatif (extrusion - malaxage acide avec excès d'acide) :

On prépare un matériau solide de formule (LiCl)$_x$.2Al(OH)$_3$,nH$_2$O avec n étant compris entre 0,01 et 1 et x = 0,6, selon un procédé de synthèse conforme à l'invention, dans lequel l'étape b) de mise en contact est réalisée avec un ratio Li/Al de 0,5 mais l'étape de mise en forme est mise en œuvre par malaxage - extrusion acide avec excès d'acide.

1/ Précipitation de boehmite AlOOH

Dans un bécher refroidi par un bain de glace, une solution contenant 326 ml d'eau permutée et 135,6 g de chlorure d'aluminium hexahydraté (AlCl$_3$,6H$_2$O) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bécher de 3 L avec 320 mL d'eau.

Un échantillon du précipité obtenu est prélevé du milieu réactionnel. Le précipité obtenu est un précipité de boehmite. Le précipité de boehmite obtenu dans l'exemple 8 présente des cristallites de faible taille (appelés également précipité « peu cristallisé »)..

La taille des cristallites de la boehmite obtenue est mesurée selon la méthode de Sherrer :

$$\text{Taille selon [020]} = 0,6 \pm 0,1 \text{ (nm) ;}$$

$$\text{Taille selon [120]} = 1,4 \pm 0,1 \text{ (nm)}$$

2/ Addition du chlorure de lithium LiCl.

On prépare une solution contenant 11,9 g de chlorure de lithium LiCl fourni par la société Prolabo, ceci correspond à un ratio molaire Li/Al de 0,5, et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule (LiCl)x.2Al(OH)$_3$,nH$_2$O avec n = 0,25 et x = 0,6 selon un procédé de synthèse conforme à l'invention.

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 13,2 g de solution d'acide oxalique à 100 g/L ce qui correspond à 7% poids d'acide oxalique par rapport à la matière sèche, la matière sèche étant la masse de ladite pate issue du séchage précédent, séchée en étuve à 200°C pendant 6h. Le malaxage est poursuivi à la même vitesse pendant 20 minutes après la fin de l'ajout d'acide.

La pâte obtenue est mise en forme à l'aide d'une extrudeuse piston (MTS), équipée d'une filière cylindrique de 1 mm de diamètre.

Des extrudés du matériau solide présentant une bonne cohésion et un aspect correct sont obtenus. Une phase LiCl.2Al(OH)$_3$,nH$_2$O est détectée sur le diagramme de diffraction des rayons X des extrudés du matériau solide de formule LiCl.2Al(OH)$_3$,nH$_2$O.

Les extrudés obtenus selon l'exemple 8 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

Exemple 9 : test de capacité d'adsorption et de cinétique d'adsorption.

La cinétique d'adsorption du lithium par les extrudés et leur capacité d'adsorption est testée par la réalisation d'une courbe de perçage dite aussi courbe de fuite ou courbe de saturation en colonne. Une courbe de saturation est réalisée pour chacun des extrudés obtenus dans les exemples 1 à 6 :

- 15 g de solide sont placés dans une colonne
- 10 volumes de colonne d'une solution saline de chlorure de lithium (LiCl) à 0,02 mol/L traverse la colonne en circuit fermé jusqu'à atteindre une concentration stable en lithium en solution
- Une solution naturelle contenant environ 0,06 mol/L de lithium traverse la colonne par passage ascendant, à un débit de 6 BV/h, c'est-à-dire six fois le volume occupé par le lit des extrudés en une heure.
- La concentration en lithium est mesurée en sortie de la colonne en fonction du volume de solution passé.

La figure 5 illustre les courbes de saturation obtenues pour chacun des extrudés obtenus dans les exemples 1, 2 et 4 conformes à l'invention et les exemples 3, 5, 6, 7 et 8 non conformes à l'invention.

Les résultats obtenus sont récapitulés dans le tableau 1.

Tableau 1

| Exemples | x | malaxage | pH fin précipitation | Li introduit (Li/Al) | Capacité mg(Li)/g(solide sec) | Ratio B/Li |
|---|---|---|---|---|---|---|
| 1 | 0,6 | Acide oxalique 1% | 8 | 0,5 | 6,8 | 0,09 |
| 2 | 0,6 | Acide phosphorique 0,5% | 8 | 0,5 | 6,8 | 0,09 |
| 3 | 0,6 | basique | 8 | 0,5 | 6,6 | 0,2 |
| 4 | 1 | Acide oxalique 1% | 8 | 3,3 | 6 | 0,09 |
| 5 | 1 | directe | 8 | 0,5 | 6,6 | 0,09 |
| 6 | 0,6 | directe | 10 | 0,5 | 4,3 | 0,4 |
| 7 | 0,6 | liant précurseur solide d'alumine | 8 | 0,5 | 5,0 | 0,12 |
| 8 | 0,6 | Acide oxalique 7% | 8 | 0,5 | 5,5 | 0,13 |

Les extrudés obtenus selon les exemples 1, 2 et 4 selon l'invention sont comparés à ceux obtenus dans les exemples 3, 5, 6, 7 et 8 obtenus selon des procédés de préparation non-conformes à l'invention. Les extrudés des exemples 1 et 2 présentent une capacité d'adsorption en lithium de 6,8 mg(Li)/g(solide sec). Les extrudés des exemples 3 et 5 présentent une capacité d'adsorption en lithium de 6,6 mg(Li)/g(solide sec). Les extrudés de l'exemple 4 présentent une capacité d'adsorption en lithium de 6 mg(Li)/g(solide sec). Cependant, les sélectivités en B pour les exemples 1, 2 et 4 selon l'invention sont notamment meilleures d'un facteur 2 par rapport à l'exemple 3 non-conforme à l'invention. Le ratio B/Li est de 0,09 pour les exemples 1, 2 et 4 alors qu'il est de 0,2 pour l'exemple 3 et de 0,4 pour l'exemple 6.

Les extrudés obtenus dans l'exemple 7 selon un procédé de préparation non-conforme à l'invention sont comparés à ceux de l'exemple 2 selon l'invention. L'utilisation d'un liant précurseur solide d'alumine composé d'un mélange de boehmite et d'acide phosphorique induit une perte de capacité des extrudés qui passe de 6,8 mg(Li)/g(solide sec) à 5,0 mg(Li)/g(solide sec).

Les extrudés obtenus dans l'exemple 8 selon un procédé de préparation non-conforme à l'invention sont comparés à ceux de l'exemple 1 selon l'invention. L'utilisation d'un excès d'acide oxalique, ici 7%, induit une perte de capacité des extrudés qui passe de 6,8 mg(Li)/g(solide sec) à 5,5 mg(Li)/g(solide sec).

**Revendications**

1.  Procédé de préparation d'un matériau solide cristallisé de formule $(LiCl)_x.2Al(OH)_3,nH_2O$ avec n étant compris entre 0,01 et 10, x étant compris entre 0,4 et 1, ledit procédé comprenant au moins les étapes suivantes :

a) une étape de précipitation de la boehmite, en milieu aqueux, comprenant la mise en contact d'au moins un précurseur basique de préférence choisi parmi l'aluminate de sodium, l'aluminate de potassium, l'ammoniaque, l'hydroxyde de sodium et l'hydroxyde de potassium ; et d'au moins un précurseur acide, le chlorure d'aluminium, et l'acide chlorhydrique, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5,

b) une étape de mise en contact du précipité obtenu à l'étape a) avec au moins du chlorure de lithium (LiCl) comme source de lithium,

c) une étape de filtration de la suspension obtenue à l'étape b) pour obtenir une pâte,

d) une étape de séchage de la pâte obtenue à l'issue de l'étape c) à une température comprise entre 20 et 80°C de préférence pendant une durée de préférence comprise entre 5 minutes et 12h,

e) une étape de mise en forme de ladite pâte séchée par malaxage extrusion acide dans laquelle ladite pâte séchée issue de l'étape d) est malaxée en présence d'une quantité d'acide comprise entre 0,05 et 5 % poids par rapport à la matière sèche, la matière sèche étant la masse de ladite pâte issue de l'étape d) séchée en étuve à 200°C de préférence pendant 6h, ledit acide étant un acide organique ou inorganique, et dans laquelle ladite pâte est ensuite soumise à une étape d'extrusion, ladite étape e) de mise en forme par malaxage extrusion acide étant mise en œuvre en l'absence de liant ou en présence d'un liant à l'exception d'un liant choisi parmi les précurseurs solides d'alumine choisis parmi les oxydes d'aluminium, les hydroxydes d'aluminium et les oxyhydroxydes d'aluminium solubles ou dispersibles dans une solution d'acide phosphorique,

f) une étape de séchage du matériau mis en forme obtenu à l'issue de l'étape e) à une température comprise entre 20 et 200°C, de préférence pendant une durée de préférence comprise entre 5 minutes et 20 heures.

2. Procédé selon la revendication 1, dans lequel le précurseur basique est l'hydroxyde de sodium (NaOH).

3. Procédé selon l'une des revendications 1 ou 2, dans lequel la quantité du précurseur basique est choisie de manière à obtenir un pH de fin de précipitation de ladite étape a) dans le milieu réactionnel compris entre 7,7 et 8,8.

4. Procédé selon l'une quelconque des revendications 1 à 3, dans lequel ladite étape b) mise en œuvre en présence d'une quantité de chlorure de lithium équivalent à un ratio molaire Li/Al compris entre 0,3 et 4.

5. Procédé selon l'une quelconque des revendications 1 à 4, dans lequel l'acide organique utilisé dans ladite étape e) est choisi parmi les acides carboxyliques et leurs dérivés choisis parmi les sels d'acides carboxyliques, les sels d'alcalino-terreux, les sels d'alcalins, les sels d'ammonium, et les anhydrides d'acides, et l'acide inorganique utilisé dans ladite étape e) est choisi parmi l'acide nitrique, l'acide phosphorique, l'acide sulfurique et l'acide chlorhydrique seul ou l'un quelconque de leurs mélanges.

6. Procédé selon la revendication 5 dans lequel ledit acide est un acide organique choisi parmi l'acide oxalique, l'acide malonique, l'acide succinique, l'acide glutarique, l'acide adipique, seuls ou l'un quelconque de leurs mélanges.

7. Procédé selon la revendication 6, dans lequel ladite étape e) de mise en forme est mise en œuvre en présence d'acide oxalique.

8. Procédé selon la revendication 7, dans lequel ladite pâte séchée est malaxée en présence d'une quantité d'acide comprise entre 0,1 et 2,5 % poids par rapport à la matière sèche, la matière sèche étant la masse de ladite pate issue de l'étape e), séchée en étuve à 200°C de préférence pendant 6h dans ladite étape e) de mise en forme.

9. Procédé selon l'une quelconque des revendications 1 à 8, dans lequel ladite étape e) de mise en forme par malaxage extrusion acide est mise en œuvre en l'absence de liant.

10. Procédé d'extraction du lithium de solutions salines, ledit procédé comprenant la préparation d'un matériau solide de formule $(LiCl)_x.2Al(OH)_3,nH_2O$ avec n étant compris entre 0,01 et 10, x étant compris entre 0,4 et 1, préparé selon le procédé tel que défini selon l'une quelconque des revendications 1 à 9, et la mise en œuvre de ce matériau solide pour l'extraction de lithium de solutions salines.

11. Procédé d'extraction selon la revendication 10, dans lequel ledit procédé d'extraction du lithium comprend au moins les étapes suivantes :

- une étape d'activation dudit matériau solide cristallisé de formule $(LiCl)_x.2Al(OH)_3,nH_2O$,
- une étape de chargement dudit matériau activé par adsorption, réalisée par passage de ladite solution saline sur ledit matériau activé,
- éventuellement au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

**12.** Procédé d'extraction selon la revendication 11, dans lequel ladite étape d'activation est réalisée par le passage ascendant ou descendant d'eau ou d'une solution de chlorure de lithium (LiCl) ayant une concentration comprise entre 0,001 mol/L et 0,1 mol/L.

**13.** Procédé d'extraction selon la revendication 11 ou 12, dans lequel ladite étape d'activation est réalisée par le passage ascendant ou descendant d'eau ou d'une solution de chlorure de lithium (LiCl), ladite étape d'activation étant réalisée à une température comprise entre 0°C et 90°C, et avec un temps de séjour de ladite solution de chlorure de lithium ou d'eau dans la colonne compris entre 0,03 et 10 h.

**14.** Procédé d'extraction selon l'une quelconque des revendications 11 à 13, dans lequel ladite étape de chargement est effectuée à une température comprise entre 0°C et 90°C, et avec un temps de séjour de ladite solution saline dans la colonne compris entre 0,03 et 10 h.

**15.** Procédé d'extraction selon l'une quelconque des revendications 11 à 14, dans lequel ladite solution de lavage utilisée dans l'étape de lavage est l'eau ou une solution aqueuse de chlorure de sodium (NaCl), comprenant éventuellement du chlorure de lithium (LiCl).

**16.** Procédé d'extraction selon l'une quelconque des revendications 11 à 15, dans lequel ladite étape de lavage est réalisée à une température comprise entre 0°C et 90°C, et avec un temps de séjour de ladite solution de lavage dans la colonne compris entre 0,03 et 10 h.

**17.** Procédé d'extraction selon l'une quelconque des revendications 11 à 16, dans lequel ladite étape de désorption est réalisée par passage ascendant ou descendant, d'une solution de désorption choisi parmi l'eau et une solution de chlorure de lithium (LiCl) contenant de 0,001 mol/L à 2 mol/L de LiCl.

**18.** Procédé d'extraction selon l'une quelconque des revendications 11 à 17, dans lequel ladite étape de désorption est réalisée à une température comprise entre 0°C et 90°C, et avec un temps de séjour de ladite solution de désorption dans la colonne compris entre 0,03 et 10 h.

**19.** Matériau solide cristallisé de formule $(LiCl)_x.2Al(OH)_3,nH_2O$ avec n étant compris entre 0,01 et 10, x étant compris entre 0,4 et 1, **caractérisé en ce que** ledit matériau est susceptible d'être obtenu par un procédé selon l'une quelconque des revendications 1 à 9.

**Patentansprüche**

**1.** Verfahren zur Herstellung einer festen kristallisierten Substanz von Formel $(LiCl)_x.2Al(OH)_3,nH_2O$, wobei n zwischen 0,01 und 10 ist, x zwischen 0,4 und 1 ist, das Verfahren umfassend mindestens die folgenden Schritte:

a) einen Präzipitationsschritt des Böhmits in wässrigem Medium, umfassend das Inkontaktbringen mindestens eines basischen Vorläufers, vorzugsweise ausgewählt aus Natriumaluminat, Kaliumaluminat, Ammoniak, Natriumhydroxid und Kaliumhydroxid, und aus mindestens einem sauren Vorläufer, Aluminiumchlorid und Salzsäure, wobei mindestens einer von dem basischen oder dem sauren Vorläufer Aluminium umfasst, um eine Böhmit-Suspension zu erlangen, wobei Schritt a) bei einer Temperatur zwischen 5 und 35 °C durchgeführt wird und die Menge des basischen Vorläufers gewählt ist, um einen pH am Präzipitationsende in dem Reaktionsmedium zwischen 7,5 und 9,5 zu erlangen,
b) einen Schritt zum Inkontaktbringen des in Schritt a) erlangten Präzipitats mit mindestens Lithiumchlorid (LiCl) als Lithiumquelle,
c) einen Filtrationsschritt der in Schritt b) erlangten Suspension, um eine Paste zu erlangen,
d) einen Trocknungsschritt der am Ende von Schritt c) erlangten Paste bei einer Temperatur zwischen 20 und 80 °C vorzugsweise über eine Dauer, die zwischen 5 Minuten und 12 Stunden liegt,
e) einen Schritt zum Formen der getrockneten Paste durch saures Extrusionskneten, wobei die getrocknete Paste von Schritt d) in Anwesenheit einer Säuremenge zwischen 0,05 und 5 Gewichtsprozent, bezogen auf die Trockensubstanz, geknetet wird, wobei die Trockensubstanz die Masse der Paste von Schritt d) ist, die in Ofen bei 200 °C vorzugsweise über 6 Stunden getrocknet wurde, wobei die Säure eine organische oder anorganische Säure ist, und wobei die Paste anschließend einem Extrusionsschritt unterzogen wird, wobei Schritt e) eines Formens saures Extrusionskneten in Abwesenheit eines Bindemittels oder in Anwesenheit eines Bindemittels mit Ausnahme eines Bindemittels, das aus den festen Vorläufern von Aluminiumoxid ausgewählt ist, die aus Aluminiumoxiden, Aluminiumhydroxiden und Aluminiumoxyhydroxiden ausgewählt sind, die in einer Phosphorsäurelösung löslich oder dispergierbar sind, durchgeführt wird,

d) einen Trocknungsschritt der geformten Substanz, die am Ende von Schritt c) erlangt wird, bei einer Temperatur zwischen 20 und 200 °C vorzugsweise über eine Dauer, die zwischen 5 Minuten und 20 Stunden liegt.

2. Verfahren nach Anspruch 1, wobei der basische Vorläufer Natriumhydroxid (NaOH) ist.

3. Verfahren nach einem der Ansprüche 1 oder 2, wobei die Menge des basischen Vorläufers gewählt ist, um am Präzipitationsende von Schritt a) ein pH in dem im Reaktionsmediumzwischen 7,7 und 8,8 zu erlangen.

4. Verfahren nach einem der Ansprüche 1 bis 3, wobei der Schritt b) in Anwesenheit einer Menge an Lithiumchlorid durchgeführt wird, die einem Li/Al-Molverhältnis entspricht, das zwischen 0,3 und 4 liegt.

5. Verfahren nach einem der Ansprüche 1 bis 4, wobei die in Schritt e) verwendete organische Säure ausgewählt ist aus Carbonsäuren und ihren Derivaten, ausgewählt aus Carbonsäuresalzen, Erdalkalisalzen, Alkalisalzen, Ammoniumsalzen und Säureanhydriden ausgewählt ist, und die in Schritt e) verwendete anorganische Säure ausgewählt ist aus Salpetersäure, Phosphorsäure, Schwefelsäure und Salzsäure allein oder einem beliebigen Gemisch davon.

6. Verfahren nach Anspruch 5, wobei die Säure eine organische Säure ist, ausgewählt aus Oxalsäure, Malonsäure, Bernsteinsäure, Glutarsäure, Adipinsäure, jeweils allein oder einem beliebigen Gemisch davon.

7. Verfahren nach Anspruch 6, wobei der Schritt e) eines Formens in Anwesenheit von Oxalsäure durchgeführt wird.

8. Verfahren nach Anspruch 7, wobei die getrocknete Paste in Anwesenheit einer Säuremenge zwischen 0,1 und 2,5 Gewichtsprozent, bezogen auf die Trockensubstanz, geknetet wird, wobei die Trockensubstanz die Masse der Paste von Schritt e) ist, die in dem Schritt f) eines Formens vorzugsweise über 6 Stunden bei 200 °C in Ofen getrocknet wird.

9. Verfahren nach einem der Ansprüche 1 bis 8, wobei der Schritt e) eines Formens durch saures Extrusionskneten in Abwesenheit von Bindemittel durchgeführt wird.

10. Verfahren zur Extraktion von Lithium aus Salzlösungen, das Verfahren umfassend die Herstellung einer festen Substanz von Formel $(LiCl)_x.2Al(OH)_3$, $nH_2O$, wobei n zwischen 0,01 und 10 liegt, x zwischen 0,4 und 1, hergestellt gemäß dem Verfahren, wie es in einem der Ansprüche 1 bis 9 definiert ist, und die Durchführung dieser festen Substanz für die Extraktion von Lithium aus Salzlösungen.

11. Extraktionsverfahren nach Anspruch 10, wobei das Extraktionsverfahren von Lithium mindestens die folgenden Schritte umfasst:

- einen Schritt einer Aktivierung der kristallisierten festen Substanz von Formel $(LiCl)x.2Al(OH)_3$, $nH_2O$,
- einen Beladungsschritt der durch Adsorption aktivierten Substanz, der ausgeführt wird, indem die Salzlösung über die aktivierte Substanz geleitet wird,
- gegebenenfalls mindestens einen Waschschritt der Salzlösung, die das Material imprägniert, indem eine Waschlösung über das Material geleitet wird,
- einen Desorptionsschritt von Lithium, der ausgeführt wird, indem Wasser oder eine wässrige Lithiumsalzlösung über die Substanz geleitet wird, um ein Eluat zu erlangen, das mindestens Lithium umfasst.

12. Extraktionsverfahren nach Anspruch 11, wobei der Aktivierungsschritt durch den Aufwärts- oder Abwärtsdurchgang von Wasser oder einer Lithiumchloridlösung (LiCl) mit einer Konzentration zwischen 0,001 mol/L und 0,1 mol/L ausgeführt wird.

13. Extraktionsverfahren nach Anspruch 11 oder 12, wobei der Aktivierungsschritt durch den aufsteigenden oder absteigenden Durchgang von Wasser oder einer Lithiumchloridlösung (LiCl) ausgeführt wird, wobei der Aktivierungsschritt bei einer Temperatur zwischen 0 °C und 90 °C und mit einer Verweilzeit der Lithiumchloridlösung oder des Wassers in der Säule zwischen 0,03 und 10 Stunden ausgeführt wird.

14. Extraktionsverfahren nach einem beliebigen der Ansprüche 11 bis 13, wobei der Beladungsschritt bei einer Temperatur zwischen 0 °C und 90 °C und mit einer Verweilzeit der Salzlösung in der Säule zwischen 0,03 und 10 Stunden ausgeführt wird.

15. Extraktionsverfahren nach einem beliebigen der Ansprüche 11 bis 14, wobei die in dem Waschschritt verwendete Waschlösung Wasser oder eine wässrige Lösung von Natriumchlorid (NaCl) ist, gegebenenfalls umfassend Lithiumchlorid (LiCl).

16. Extraktionsverfahren nach einem beliebigen der Ansprüche 11 bis 15, wobei der Waschschritt bei einer Temperatur zwischen 0 °C und 90 °C und mit einer Verweilzeit der Waschlösung in der Säule zwischen 0,03 und 10 Stunden ausgeführt wird.

17. Extraktionsverfahren nach einem beliebigen der Ansprüche 11 bis 16, wobei der Desorptionsschritt durch Aufwärts- oder Abwärtsdurchgang einer Desorptionslösung, ausgewählt aus Wasser und einer Lithiumchloridlösung (LiCl), die 0,001 mol/L bis 2 mol/L LiCl enthält, ausgeführt wird.

18. Extraktionsverfahren nach einem beliebigen der Ansprüche 11 bis 17, wobei der Desorptionsschritt bei einer Temperatur zwischen 0 °C und 90 °C und mit einer Verweilzeit der Desorptionslösung in der Säule zwischen 0,03 und 10 Stunden ausgeführt wird.

19. Kristallisierte feste Substanz von Formel $(LiCl)_x.2Al(OH)_3$, $nH_2O$, wobei n zwischen 0,01 und 10 liegt, x zwischen 0,4 und 1 liegt, **dadurch gekennzeichnet, dass** die Substanz durch ein Verfahren nach einem beliebigen der Ansprüche 1 bis 9 erlangt werden kann.

**Claims**

1. Method for preparing a crystalline solid material of formula $(LiCl)_x.2Al(OH)_3,nH_2O$, wherein n is between 0.01 and 10, x is between 0.4 and 1, and wherein the method comprises at least the following steps:

   a) a step of precipitating boehmite, in an aqueous medium, comprising bringing into contact at least one basic precursor preferably selected from among sodium aluminate, potassium aluminate, ammonia, hydroxide, sodium and potassium hydroxide; and at least one acidic precursor, aluminum chloride, and hydrochloric acid, wherein at least one of the basic or acidic precursors comprises aluminum, in order to obtain a boehmite suspension, wherein step a) is carried out at a temperature of between 5 and 35°C, and the amount of the basic precursor is chosen in order to obtain a pH of the end of precipitation in the reaction medium of between 7.5 and 9.5,
   b) a step of bringing into contact the precipitate obtained in step a) with at least lithium chloride (LiCl) as lithium source,
   c) a filtration step of the suspension obtained in step b) to obtain a paste,
   d) a step of drying the paste obtained at the end of step c) at a temperature between 20 and 80°C, preferably for a duration of between 5 minutes and 12 hours,
   e) a step of shaping the paste dried by acid extrusion-kneading, wherein the dried paste resulting from step d) is kneaded in the presence of an amount of acid of between 0.05 and 5% by weight relative to the dry material, wherein the dry material is the weight of the paste resulting from step d) dried in an autoclave at 200°C, preferably for 6 hours, wherein the acid is an organic or inorganic acid, and wherein the paste is then subjected to in an extrusion step, the step e) of shaping by acid extrusion-kneading that is carried out in the absence of a binder or in the presence of a binder except for a binder chosen from solid precursors of alumina chosen from among aluminum oxides, aluminum hydroxides and aluminum oxyhydroxides which are soluble or dispersible in a solution of phosphoric acid,
   f) a step of drying the shaped material obtained at the end of step e) at a temperature between 20 and 200°C, preferably for a period between 5 minutes and 20 hours.

2. Method according to claim 1, wherein the basic precursor is sodium hydroxide (NaOH).

3. Method according to one of the claims 1 or 2, wherein the amount of the basic precursor is chosen in order to obtain an end of precipitation pH of step a) in the reaction medium of between 7.7 and 8.8.

4. Method according to any one of the claims 1 to 3, wherein the step b) is carried out in the presence of a quantity of lithium chloride equivalent to a molar ratio Li/Al between 0.3 and 4.

5. Method according to any one of the claims 1 to 4, wherein the organic acid used in step e) is chosen from among carboxylic acids and their derivatives chosen from among carboxylic acid salts, alkaline salts and earth salts, alkali metal salts, ammonium salts, and acid anhydrides, while the inorganic acid used in step e) is selected from among nitric acid, phosphoric acid, sulfuric acid and hydrochloric acid alone or any of their mixtures.

6. Method according to claim 5 wherein the acid is an organic acid selected from among oxalic acid, malonic acid, succinic acid, glutaric acid, adipic acid, alone or any of their mixtures.

7. Method according to claim 6, wherein the shaping step e) is carried out in the presence of oxalic acid.

8. Method according to claim 7, wherein the dried paste is kneaded in the presence of an amount of acid of between 0.1 and 2.5% by weight relative to the dry material, wherein the dry material is the weight of the paste from step e), dried in an autoclave at 200°C, preferably for 6 hours in the shaping step e).

9. Method according to any one of the claims 1 to 8, wherein in step e) shaping by acid extrusion-kneading is carried out in the absence of binder.

10. Method for extracting lithium from saline solutions, wherein the method comprises preparing a solid material of formula $(LiCl)_x.2Al(OH)_3,nH_2O$, wherein n is between 0.01 and 10, x is between 0.4 and 1, prepared according to the method as defined in any one of the claims 1 to 9, and implementing this solid material for the extraction of lithium from saline solutions.

11. Extraction method according to claim 10, wherein the lithium extraction method comprises at least the following steps:

    - an activation step of the solid crystallized material of formula $(LiCl)_x.2Al(OH)_3,nH_2O$,
    - a step of loading the activated material by adsorption, carried out by passing the saline solution on the activated material,
    - optionally at least one step of washing the saline solution by impregnating the material by passing a washing solution on the material,
    - a lithium desorption step carried out by passing water or an aqueous solution of lithium salt on the material in order to obtain an eluate comprising at least lithium.

12. Extraction method according to claim 11, wherein the activation step is carried out by the upward or downward passage of water or a solution of lithium chloride (LiCl) having a concentration of between 0.001 mol/L and 0.1 mol/L.

13. Extraction method according to claim 11 or 12, wherein the activation step is carried out by the upward or downward passage of water or a solution of lithium chloride (LiCl), wherein the activation step is carried out at a temperature between 0°C and 90°C, and with a residence time of the solution of lithium chloride or water in the column between 0.03 and 10 h.

14. Extraction method according to any one of the claims 11 to 13, wherein the loading step is carried out at a temperature between 0°C and 90°C, and with a residence time of the salt solution in the column between 0.03 and 10 h.

15. Extraction method according to any one of the claims 11 to 14, wherein the washing solution used in the washing step is water or an aqueous solution of sodium chloride (NaCl), optionally comprising lithium chloride (LiCl).

16. Extraction method according to any one of the claims 11 to 15, wherein the washing step is carried out at a temperature between 0°C and 90°C, and with a residence time of the washing solution in the column between 0.03 and 10 h.

17. Extraction method according to any one of the claims 11 to 16, wherein the desorption step is carried out by upward or downward passage of a desorption solution chosen from water and a solution of lithium chloride (LiCl) containing from 0.001 mol/L to 2 mol/L LiCl.

18. Extraction method according to any one of the claims 11 to 17, wherein the desorption step is carried out at a temperature between 0°C and 90°C, and with a residence time of the desorption solution in the column between 0.03 and 10 h.

**19.** Crystalline solid material of formula $(LiCl)_x.2Al(OH)_3,nH_2O$, wherein n is between 0.01 and 10, x is between 0.4 and 1, **characterized in that** said material is obtainable by a process according to anyone of claims 1 to 9.

FIG.1

FIG.2

FIG.3

FIG.4

2 thêta-scale

EP 3 478 406 B1

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6280693 B
- RU 2234367
- CN 1243112
- WO 2018097205 A1

**Littérature non-brevet citée dans la description**

- **J. I. LANGFORD ; A. J. C. WILSON.** Scherrer after sixty years: A survey and some new results in the détermination of crystallite size. *Appl. Cryst.,* 1978, vol. 11, 102-113